# EUROPEAN PATENT SPECIFICATION

(11) **EP 4 223 057 B1**
(45) Date of publication and mention of the grant of the patent: **10.06.2026**
(21) Application number: 21748891.5
(22) Date of filing: 26.07.2021
(51) Int. Cl.: H04W 74/0833

(54) **TRANSCEIVER DEVICE AND SCHEDULING DEVICE INVOLVED IN TRANSMISSION OF SMALL DATA**
SENDER-EMPFÄNGER-VORRICHTUNG UND PLANUNGSVORRICHTUNG, DIE AN DER ÜBERTRAGUNG KLEINER DATEN BETEILIGT SIND
DISPOSITIF ÉMETTEUR-RÉCEPTEUR ET DISPOSITIF DE PLANIFICATION DE BASE IMPLIQUÉS DANS LA TRANSMISSION DE DONNÉES DE PETITE TAILLE

(30) Priority: 01.10.2020 EP 20199661
(43) Date of publication of application: 09.08.2023
(73) Proprietor: Panasonic Intellectual Property Corporation of America, Torrance, CA 90504 (US)
(72) Inventor: SHAH, Rikin, 63225 Langen (DE); SUZUKI, Hidetoshi, Kadoma-shi, Osaka, 571-8501 (JP); TAO, Ming-Hung, 63225 Langen (DE)
(74) Representative: Grünecker Patent- und Rechtsanwälte PartG mbB
(86) International application number: PCT/EP2021/070807
(87) International publication number: WO 2022/069095

(56) References cited:
- EP-A1- 3 506 708
- WO-A1-2020/034560
- WO-A1-2020/087280
- WO-A1-2020/167205

## Description

The present disclosure is directed to communication systems, such as 3GPP communication systems.

Currently, the 3rd Generation Partnership Project (3GPP) works at the technical specifications for the next generation cellular technology, which is also called fifth generation (5G).

One objective is to provide a single technical framework addressing all usage scenarios, requirements and deployment scenarios (see e.g. section 6 of TR 38.913 version 15.0.0), at least including enhanced mobile broadband (eMBB), ultra-reliable low-latency communications (URLLC), massive machine type communication (mMTC). For example, eMBB deployment scenarios may include indoor hotspot, dense urban, rural, urban macro and high speed; URLLC deployment scenarios may include industrial control systems, mobile health care (remote monitoring, diagnosis and treatment), real time control of vehicles, wide area monitoring and control systems for smart grids; mMTC deployment scenarios may include scenarios with large number of devices with non-time critical data transfers such as smart wearables and sensor networks. The services eMBB and URLLC are similar in that they both demand a very broad bandwidth, however are different in that the URLLC service may preferably require ultra-low latencies.

A second objective is to achieve forward compatibility. Backward compatibility to Long Term Evolution (LTE, LTE-A) cellular systems is not required, which facilitates a completely new system design and/or the introduction of novel features.

WO 2020/087280 A1 relates to a small data transmission in a wireless communication system, wherein a UE transmits user data in the framework of a RACH procedure while in an RRC inactive state.

WO 2020/167205 A1 relates to the transmission of an RRC resume request, which may carry network measurement information

WO 2020/034560 A1 relates to transmission of data by a UE to a base station in the framework of a RACH procedure, wherein the UE is in an RRC inactive state. Data is transmitted within a Msg 1 together with I-RNTI and a buffer status report. Based on this information, the base station schedules resources within a certain time period, within which further transmissions of data may be performed by the UE.

EP 3 506 708 A1 relates to communication in a 5G communication system, wherein uplink data is added to an RRC connection request message corresponding to an RA response message and transmitting the same to a base station when the terminal is in an RRC deactivated state.

One embodiment facilitates providing procedures for facilitating a UE to perform an improved small-data-transmission procedure.

The invention is defined by the independent claims. The dependent claims describe advantageous embodiments.

It should be noted that general or specific embodiments may be implemented as a system, a method, an integrated circuit, a computer program, a storage medium, or any selective combination thereof. For instance, an integrated circuit can control a process of a transceiver device or scheduling device.

Additional benefits and advantages of the disclosed embodiments and different implementations will be apparent from the specification and figures. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system;
- **Fig. 2**: shows an exemplary user and control plane architecture for the LTE eNB, gNB, and UE;
- **Fig. 3**: is a schematic drawing that shows a functional split between NG-RAN and 5GC;
- **Fig. 4**: is a sequence diagram for RRC connection setup/reconfiguration procedures;
- **Fig. 5**: is a schematic drawing showing usage scenarios of Enhanced mobile broadband (eMBB), Massive Machine Type Communications (mMTC) and Ultra Reliable and Low Latency Communications (URLLC);
- **Fig. 6**: is a block diagram showing an exemplary 5G system architecture for a non-roaming scenario;
- **Fig. 7 and 8**: illustrate the contention-based and contention-free RACH procedure;
- **Fig. 9**: illustrates the possible RRC state changes;
- **Fig. 10**: illustrates a message exchange for the RRC Resume procedure;
- **Fig. 11**: illustrates a message exchange for the RRC Release procedure;
- **Fig. 12**: illustrates a message exchange of the prior art for uplink data transmission, including a state change of the UE from Inactive to Connected state;
- **Fig. 13 and 14**: illustrate an exemplary four-step RACH respectively two-step RACH usable for small-data uplink transmissions for an RRC_INACTIVE UE;
- **Fig. 15**: illustrates an exemplary and simplified structure of a UE and gNB;
- **Fig. 16**: illustrates the steps of a method performed by a transceiver device according to an embodiment;
- **Fig. 17**: illustrates the steps of a method performed by a scheduling device according to an embodiment;
- **Fig. 18**: illustrates the steps of a method performed by a transceiver device according to an embodiment;
- **Fig. 19**: illustrates the steps of a method performed by a scheduling device according to an embodiment; and
- **Fig. 20**: illustrates an example of a MAC CE indicating a traffic pattern, CG periodicity and priority level.

### DETAILED DESCRIPTION

### 5G NR system architecture and protocol stacks

3GPP has been working at the next release for the 5^{th} generation cellular technology, simply called 5G, including the development of a new radio access technology (NR) operating in frequencies ranging up to 100 GHz. The first version of the 5G standard was completed at the end of 2017, which allows proceeding to 5G NR standard-compliant trials and commercial deployments of smartphones.

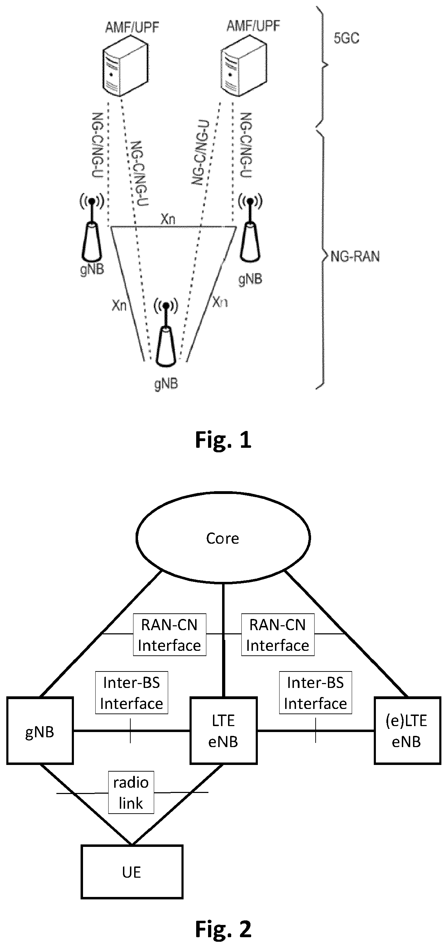

Among other things, the overall system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v16.1.0, section 4).

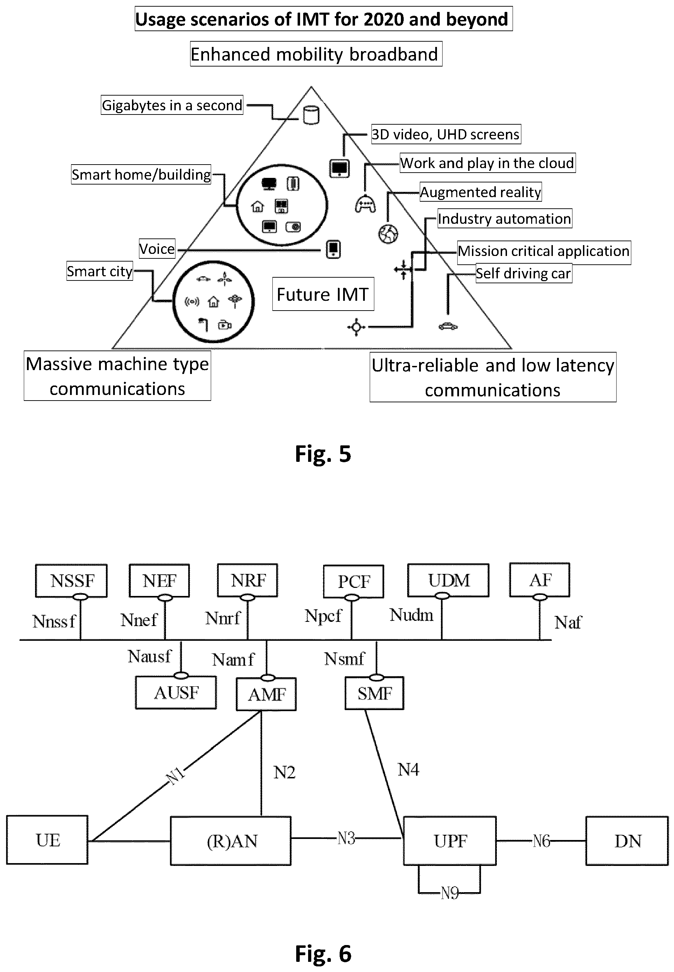

Various different deployment scenarios can be supported (see e.g. 3GPP TR 38.801 v14.0.0). For instance, a non-centralized deployment scenario (see e.g. section 5.2 of TR 38.801; a centralized deployment is illustrated in section 5.4) is presented therein, where base stations supporting the 5G NR can be deployed. **Fig. 2** illustrates an exemplary non-centralized deployment scenario (see e.g. Figure 5.2.-1 of said TR 38.801), while additionally illustrating an LTE eNB as well as a user equipment (UE) that is connected to both a gNB and an LTE eNB. The new eNB for NR 5G may be exemplarily called gNB. An eLTE eNB is the evolution of an eNB that supports connectivity to the EPC (Evolved Packet Core) and the NGC (Next Generation Core).

The user plane protocol stack for NR (see e.g. 3GPP TS 38.300, section 4.4.1) comprises the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SDAP, Service Data Adaptation Protocol) is introduced above PDCP (see e.g. sub-clause 6.5 of 3GPP TS 38.300). A control plane protocol stack is also defined for NR (see for instance TS 38.300, section 4.4.2). An overview of the Layer 2 functions is given in sub-clause 6 of TS 38.300. The functions of the PDCP, RLC and MAC sublayers are listed respectively in sections 6.4, 6.3 and 6.2 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability (1-10⁻⁵ within 1ms). Finally, mMTC may preferably require high connection density (1,000,000 devices/km² in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15kHz, 30kHz, 60 kHz... are being considered at the moment. The symbol duration Tᵤ and the subcarrier spacing Δf are directly related through the formula Δf = 1 / Tᵤ. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v16.2.0, e.g. section 4). For instance, downlink and uplink transmissions are organized into frames with 10ms duration, each frame consisting of ten subframes of respectively 1ms duration. In 5g NR implementations the number of consecutive OFDM symbols per subframe depends on the subcarrier-spacing configuration. For example, for a 15-kHz subcarrier spacing, a subframe has 14 OFDM symbols (similar to an LTE-conformant implementation, assuming a normal cyclic prefix). On the other hand, for a 30-kHz subcarrier spacing, a subframe has two slots, each slot comprising 14 OFDM symbols.

### 5G NR functional split between NG-RAN and 5GC

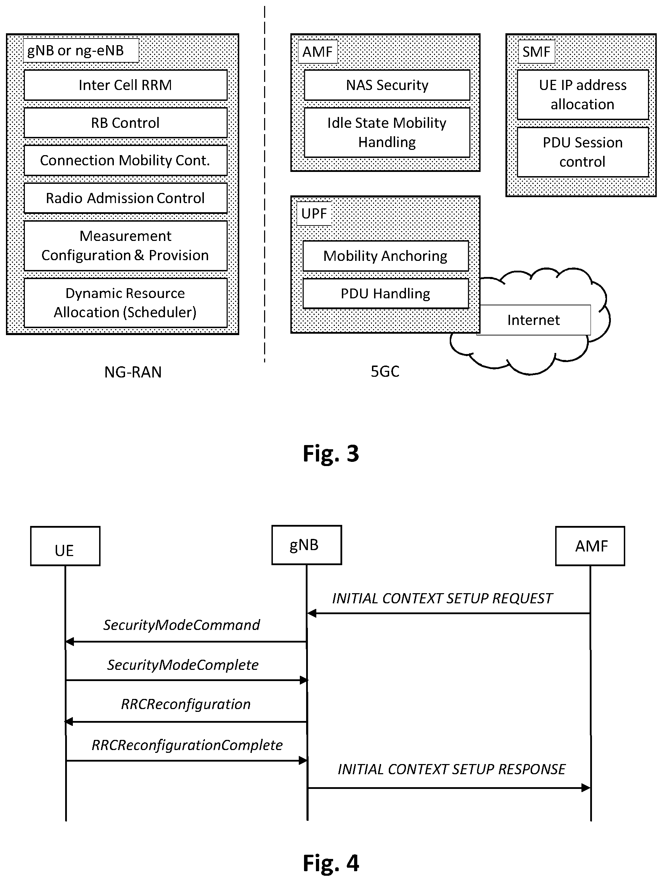

**Fig. 3** illustrates functional split between NG-RAN and 5GC. NG-RAN logical node is a gNB or ng-eNB. The 5GC has logical nodes AMF, UPF and SMF.

In particular, the gNB and ng-eNB host the following main functions:
- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from the AMF or OAM);
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:
- Non-Access Stratum, NAS, signalling termination;
- NAS signalling security;
- Access Stratum, AS, Security control;
- Inter Core Network, CN, node signalling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function, SMF, selection.

Furthermore, the User Plane Function, UPF, hosts the following main functions:
- Anchor point for Intra-/Inter-RAT mobility (when applicable);
- External PDU session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g. packet filtering, gating, UL/DL rate enforcement;
- Uplink Traffic verification (SDF to QoS flow mapping);
- Downlink packet buffering and downlink data notification triggering.

Finally, the Session Management function, SMF, hosts the following main functions:
- Session Management;
- UE IP address allocation and management;
- Selection and control of UP function;
- Configures traffic steering at User Plane Function, UPF, to route traffic to proper destination;
- Control part of policy enforcement and QoS;
- Downlink Data Notification.

### RRC connection setup and reconfiguration procedures

**Fig. 4** illustrates some interactions between a UE, gNB, and AMF (a 5GC entity) in the context of a transition of the UE from RRC_IDLE to RRC_CONNECTED for the NAS part (see TS 38.300).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element (IE) to the UE via the signaling radio bearer. The UE then performs an uplink transmission or a downlink reception based on the resource allocation configuration.

### Usage Scenarios of IMT for 2020 and beyond

**Fig. 5** illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. Fig. 4 illustrates some examples of envisioned usage scenarios for IMT for 2020 and beyond (see e.g. ITU-R M.20183 Fig. 2).

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by TR 38.913 version 15.0.0. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1ms.

From the physical layer perspective, reliability can be improved in a number of possible ways. The current scope for improving the reliability involves defining separate CQI tables for URLLC, more compact DCI formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution, including factory automation, transport industry, and electrical power distribution. The tighter requirements are higher reliability (up to 10⁶ level), higher availability, packet sizes of up to 256 bytes, time synchronization down to the order of a few µs where the value can be one or a few µs depending on frequency range and short latency in the order of 0.5 to 1 ms in particular a target user plane latency of 0.5 ms, depending on the use cases.

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also, PUSCH enhancements related to mini-slot level hopping and retransmission/repetition enhancements have been identified. The term "mini-slot" refers to a Transmission Time Interval (TTI) including a smaller number of symbols than a slot (a slot comprising fourteen symbols).

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

**Fig. 6** illustrates a 5G NR non-roaming reference architecture (see TS 23.501 v16.3.0, section 4.2.3). An Application Function (AF), e.g. an external application server hosting 5G services, exemplarily described in Fig. 4, interacts with the 3GPP Core Network in order to provide services, for example to support application influence on traffic routing, accessing Network Exposure Function (NEF) or interacting with the Policy framework for policy control (see Policy Control Function, PCF), e.g. QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

**Fig. 6** shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g. operator services, Internet access or 3rd party services. All of or a part of the core network functions and the application services may be deployed and running on cloud computing environments.

In the present disclosure, thus, an application server (for example, AF of the 5G architecture), is provided that comprises a transmitter, which, in operation, transmits a request containing a QoS requirement for at least one of URLLC, eMBB and mMTC services to at least one of functions (for example NEF, AMF, SMF, PCF,UPF, etc.) of the 5GC to establish a PDU session including a radio bearer between a gNodeB and a UE in accordance with the QoS requirement and control circuitry, which, in operation, performs the services using the established PDU session.

### Random Access procedure

Similar to LTE, 5G NR provides a RACH (Random Access Channel) procedure (or simply random access procedure). For instance, the RACH procedure can be used by the UE to access a cell it has found. The RACH procedure can also be used in other contexts within NR, for example:
- For handover, when synchronization is to be established to a new cell;
- To reestablish uplink synchronization to the current cell, if synchronization has been lost due to a too long period without any uplink transmission from the device;
- To request uplink scheduling, if no dedicated scheduling request resource has been configured for the device.

There are numerous events that may trigger the UE to perform a random access procedure (see 3GPP TS 38.300, v16.1.0 section 9.2.6), including the following. The random access procedure is triggered by a number of events:
- Initial access from RRC_IDLE;
- RRC Connection Re-establishment procedure;
- DL or UL data arrival during RRC_CONNECTED when UL synchronization status is "non-synchronized";
- UL data arrival during RRC_CONNECTED when there are no PUCCH resources for SR available;
- SR failure;
- Request by RRC upon synchronous reconfiguration (e.g. handover);
- Transition from RRC_INACTIVE;
- To establish time alignment for a secondary TAG;
- Request for Other SI (see clause 7.3);
- Beam failure recovery;
- Consistent UL LBT failure on SpCell.

A mobile terminal can be scheduled for uplink transmission, if its uplink transmission is time synchronized. Therefore, the Random Access Channel (RACH) procedure plays a role as an interface between non-synchronized mobile terminals (UEs) and the orthogonal transmission of the uplink radio access. For instance, the Random Access is used to achieve uplink time synchronization for a user equipment, which either has not yet acquired, or has lost, its uplink synchronization. Once a user equipment has achieved uplink synchronization, the base station can schedule uplink transmission resources for it. One scenario relevant for random access is where a user equipment in RRC_CONNECTED state, handing over from its current serving cell to a new target cell, performs the Random Access Procedure in order to achieve uplink time-synchronization in the target cell.

There can be at least two types of random access procedures, allowing access to be either contention based (i.e. implying an inherent risk of collision), or contention free (non-contention based). An exemplary definition of a random access procedure can be found in 3GPP TS 38.321, v16.0.0 section 5.1.

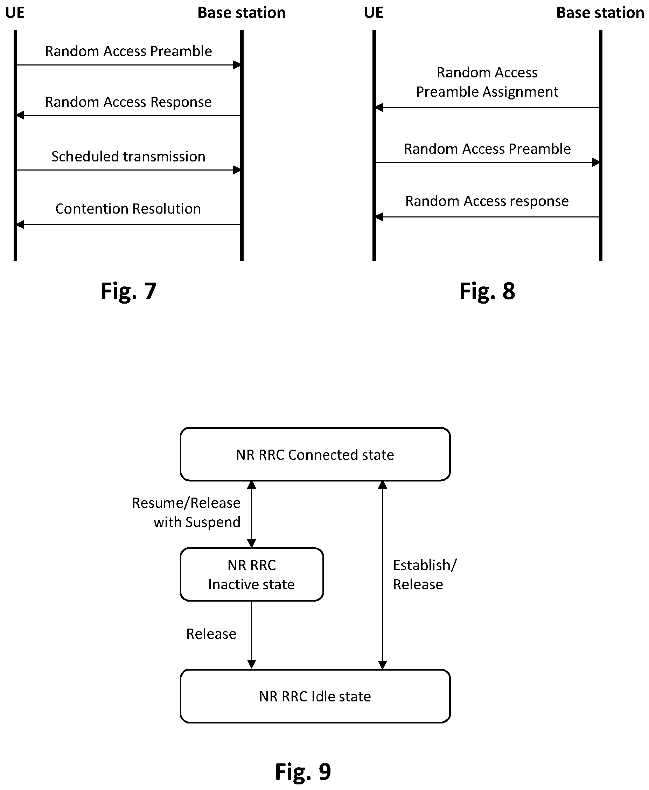

The RACH procedure will be described in the following in more detail, with reference to **Fig. 7 and 8****.** In the following, the contention-based random access procedure is being described in more detail with respect to **Fig. 7****.** This procedure consists of four "steps" and thus can be termed for example as a 4-step RACH procedure. First, the user equipment transmits a random access preamble on the Physical Random Access Channel (PRACH) to the base station (i.e. message 1 of the RACH procedure). After the base station has detected a RACH preamble, it sends a Random Access Response (RAR) message (message 2 of the RACH procedure) on the PDSCH (Physical Downlink Shared Channel) addressed on the PDCCH with the (Random Access) RA-RNTI identifying the time-frequency and slot in which the preamble was detected. If multiple user equipments transmitted the same RACH preamble in the same PRACH resource, which is also referred to as collision, they would receive the same random access response message. The RAR message may convey the detected RACH preamble, a timing alignment command (TA command) for synchronization of subsequent uplink transmissions based on the timing of the received preamble, an initial uplink resource assignment (grant) for the transmission of the first scheduled transmission and an assignment of a Temporary Cell Radio Network Temporary Identifier (T-CRNTI). This T-CRNTI is used by the base station to address the mobile(s) whose RACH preamble was detected until the RACH procedure is finished, because the "real" identity of the mobile at this point is not yet known by the base station.

The user equipment monitors the PDCCH for reception of the random access response message within a given time window (e.g. termed RAR reception window), which can be configured by the base station. In response to the RAR message received from the base station, the user equipment transmits the first scheduled uplink transmission on the radio resources assigned by the grant within the random access response. This scheduled uplink transmission conveys the actual message with certain functionality such as the RRC Connection Request, a RRC Resume Request or the buffer status report.

In case of a preamble collision having occurred in the first message of the RACH procedure (i.e. multiple user equipment have sent the same preamble on the same PRACH resource), the colliding user equipments will receive the same T-CRNTI within the random access response and will also collide in the same uplink resources when transmitting their scheduled transmission in the third step of the RACH procedure. In case the scheduled transmission from one user equipment is successfully decoded by the base station, the contention remains unsolved for the other user equipment(s). For resolution of this type of contention, the base station sends a contention resolution message (a fourth message) addressed to the C-RNTI or Temporary C-RNTI. This concludes the procedure.

**Fig. 8** is illustrating the contention-free random access procedure, which is simplified in comparison to the contention-based random access procedure. The base station provides in a first step the user equipment with the dedicated preamble to use for random access so that there is no risk of collisions, i.e. multiple user equipments transmitting the same preamble. Accordingly, the user equipment subsequently sends the preamble that was signaled by the base station in the uplink on a PRACH resource. Since the case that multiple UEs are sending the same preamble is avoided for a contention-free random access, essentially, a contention-free random access procedure is finished after having successfully received the random access response by the UE.

3GPP also defines a 2-step (contention-based) RACH procedure for 5G NR, where a message 1 (termed as MsgA), that corresponds to messages 1 and 3 in the four-step LTE/NR RACH procedure, is transmitted at first. The MsgA of the 2-step RACH type includes a preamble on the Physical Random Access Channel (PRACH) and a payload on the Physical Uplink Shared Channel (PUSCH). After MsgA transmission, the UE monitors for a response from the gNB within a configured time window. Then, the gNB will respond with a message 2 (termed as MsgB), corresponding to messages 2 and 4 of the 4-step LTE/NR RACH procedure. This MsgB can include e.g. a Success random access response (RAR), a Fallback RAR, and optionally a backoff indication. If contention resolution is successful upon receiving the Success RAR, the UE ends the random access procedure; while if Fallback RAR is received in MsgB, the UE performs message 3 transmission (as in 4-step RACH procedure) and monitors contention resolution. Some further exemplary assumptions are made for the 2-step RACH procedure, such as that the UE, after deciding on the RACH type (e.g. the 2-step RACH), keeps retrying that same RACH type until failure. But there may be also the possibility that the UE can switch to the 4-step RACH procedure after certain reattempts of transmitting MsgA.

Moreover, the network may semi-statically determine radio resources, to be used for performing the 2-step RACH procedure and the 4-step RACH procedure, that are exclusive from one another. The radio resources used for transmitting the first message in the RACH procedure include at least the RACH occasion as well as the preambles. For instance, in the 2-step RACH procedure, the first message MsgA uses not only the PRACH resource (e.g. the RACH occasion and preamble) but also the associated PUSCH resources.

Generally, for RACH preambles, see for example, 3GPP TS 38.211 V16.2.0, "Table 6.3.3.2-2: Random access configurations for FR1 and paired spectrum/supplementary uplink" and section 6.3.3.2, "Mapping to physical resources".

### Configured grant, grant free access, grant free uplink

Uplink data transmissions in LTE require a capacity requested from the UE to the base station, followed by a packed scheduling decision and resource allocation. The allocation cycle causes an additional delay and signaling. Hence, grant free access, which is also known as transmission without grant (TWG) is to be introduced in NR, where the UE is allowed to send data without prior scheduling. This approach may allow for minimizing latency and respective signaling.

Specifically, multiple devices (UEs) may be allowed to share periodic resources, called a configured grant (CG). gNB allocates configured grant resources to multiple UEs, which randomly utilize the resources when they have to transmit data. With the CG, the network eliminates packet transmission delays in terms of a scheduling request procedure. Thereby, the utilization ratio of allocated periodic radio resources may be increased as well.

There are two types of grant free configuration schemes supported in 3GPP Release 16 (see 3GPP 38.300 v16.2.0: "NR; NR and NG-RAN Overall Description; Stage 2 (Release 16)", section 10.3).

With type 1, RRC directly provides the configured uplink grant including its periodicity. Type 1 CG is similar to LTE semi-persistent scheduling (SPS), where UL data transmission is based on RRC reconfiguration without any L1 signaling. RRC provides the grant configuration to UE through higher layer parameter called ConfiguredGrantConfig.

With type 2, RRC defines the periodicity of the configured uplink grant while PDCCH addressed to CS-RNTI can either signal and activate the configured uplink grant, or deactivate it. That is, an additional L1 signaling is introduced, where uplink is semi-persistently scheduled by an UL grant in a valid activation DCI. The grant is activated and deactivated through DCI scrambled with CS-RNTI. RRC provides the higher layer parameters.

When either Type 1 CG or Type 2 CG is configured, the UE can autonomously start the uplink data transmission according to the configured periodicity and radio resources. Configured grant transmission may support multiple UEs to access the same configured grant resources, which may reduce latency, and reduce signaling overhead.

A resource configuration for a CG may comprise physical resources in a time domain and/or frequency domain, and/or reference signal (RS) parameters. The configuration parameter may include a modulation and coding scheme (MCS) and/or a number of repetitions and/or a cycle period.

### Measurement of signal level/strength and or quality

In wireless communication systems such as 3GPP communication systems, measurements of reference signals are used to perform cell selection, cell reselection, handover and the like. For this purpose, in LTE, reference signal strength indicator (RSSI), reference signals received power (RSRP) and reference signal received quality (RSRQ) are key measures of signal level and signal quality.

For instance, in a cellular network, when a UE moves from cell to cell and performed cell selection/reselection and handover, it measures the signal strength and/or quality of the neighboring cells. RSSI is defined as the total received wide-band power measured over entire bandwidth by UE. RSSI may not be reported to the base station, but is rather used in the calculation of RSRQ. RSRP is the linear average of reference signal power measure over a specified bandwidth. RSRQ is defined as (N x RSRP) / RSSI in 3GPP TS 38.214, wherein N is the number of resource blocks over the measurement bandwidth (3GPP TS 38.214 v16.1.0: "Technical Specification Group Radio Access Network; NR; Physical layer procedures for data (Release 16)", section 5.2).

In NR, "Synchronization Signal-Reference Signal Received Power" (SS-RSRP) measurements are used for cell selection, cell reselection, power control calculations, mobility procedures and beam management. UE may report SS-RSRP when sending Channel State Information (CSI) to the base station. Alternatively, UE can provide SS-RSRP measurements when sending an RRC measurement report. SS-RSRP represents the average power received from a single resource element allocated to a secondary synchronization signal.

SS-RSRQ ("Synchronization Signal-Reference Signal Received Quality" measurements can be used for cell selection, cell reselection and mobility procedures. In contrast to RSRP measurements, RSRQ measurements are not used when reporting CSI. SS-RSRQ is defined as (N x SS-RSRP)/RSSI. N is the number of resource blocks across which the RSSI is measured.

Details on the measurement capabilities of a UE in NR can be found, for instance, in section 5.1 of 3GPP 38.215 v16.2.0: "Technical Specification Group Radio Access Network; NR; Physical layer measurements".

### Logical channels/priority

Services for transfer of data provided by a layer to the higher layers are usually referred to as channels. For example, the LTE and the NR distinguish logical channels provided for higher layers by the MAC layer, transport channels provided by the physical layer to the MAC layer and physical channels which define mapping on the physical resources.

Logical channels are different kinds of data transfer services as offered by MAC. Each logical channel type is defined by what type of information is transferred. Logical channels are classified into two groups: Control Channels and Traffic Channels. Control channels are used for the transfer of control plane information only. Traffic channels are used for the transfer of user plane information only.

Logical Channels are then mapped by the MAC layer onto transport channels. For example, logical traffic channels and some logical control channels may be mapped onto the transport channel referred to as downlink shared channel DL-SCH in downlink and onto the transport channel referred to as uplink shared channel UL-SCH in uplink.

### RRC States (RRC_Connected, RRC_Inactive)

In LTE, the RRC state machine consisted of only two states, the RRC idle state (mainly characterized by high power savings, UE autonomous mobility and no established UE connectivity towards the core network) and the RRC connected state in which the UE can transmit user plane data while mobility is network-controlled to support lossless service continuity. In connection with 5G NR, the LTE-related RRC state machine is extended with an inactive state (see e.g. TS 38.331 v16.0.0, Figure 4.2.1-2), as explained in the following.

The RRC in NR 5G (see TS 38.331, section 4) supports the following three states, RRC Idle, RRC Inactive, and RRC Connected. A UE is either in RRC_CONNECTED state or in RRC_INACTIVE state when an RRC connection has been established. If this is not the case, i.e. no RRC connection is established, the UE is in RRC_IDLE state. The following state transitions are possible as illustrated in Fig. 9:
- from RRC_IDLE to RRC_CONNECTED, following e.g. the "connection establishment" procedure;
- from RRC_CONNECTED to RRC_IDLE, following e.g. the "connection release" procedure;
- from RRC_CONNECTED to RRC_INACTIVE, following e.g. the "connection release with suspend" procedure;
- from RRC_INACTIVE to RRC_CONNECTED, following e.g. the "connection resume" procedure;
- from RRC_INACTIVE to RRC_IDLE (uni-directional), following e.g. the "connection release" procedure.

The new RRC state, RRC Inactive, is defined for the new radio technology of 5G 3GPP, so as to provide benefits when supporting a wider range of services such as the eMBB (enhanced Mobile Broadband), mMTC (massive Machine Type Communications) and URLLC (Ultra-Reliable and Low-Latency Communications) which have very different requirements in terms of signalling, power saving, latency etc. The new RRC Inactive state shall thus be designed to allow minimizing signaling, power consumption and resource costs in the radio access network and core network while still allowing e.g. to start data transfer with low delay.

According to an exemplary 5G NR implementation, the different states are characterized as follows (see section 4.2.1 of TS 38.331):

### "RRC_IDLE:

- *A UE specific DRX may be configured by upper layers;*
- *UE controlled mobility based on network configuration;*
- *The UE:*
   - *Monitors Short Messages transmitted with P-RNTI over DCI (see clause 6.5);*
   - *Monitors a Paging channel for CN paging using 5G-S-TMSI;*
   - *Performs neighbouring cell measurements and cell (re-)selection;*
   - *Acquires system information and can send SI request (if configured).*

### - RRC_INACTIVE:

- *A UE specific DRX may be configured by upper layers or by RRC layer;*
- *UE controlled mobility based on network configuration;*
- *The UE stores the UE Inactive AS context;*
- *A RAN-based notification area is configured by RRC layer;*
*The UE:*
- *Monitors Short Messages transmitted with P-RNTI over DCI (see clause 6.5);*
- *Monitors a Paging channel for CN paging using 5G-S-TMSI and RAN paging using fulll-RNTI;*
- *Performs neighbouring cell measurements and cell (re-)selection;*
- *Performs RAN-based notification area updates periodically and when moving outside the configured RAN-based notification area;*
- *Acquires system information and can send SI request (if configured).*

### - RRC_CONNECTED:

- *The UE stores the AS context;*
- *Transfer of unicast data to*/*from UE;*
- *At lower layers, the UE may be configured with a UE specific DRX;*
- *For UEs supporting CA, use of one or more SCells, aggregated with the SpCell, for increased bandwidth;*
- *For UEs supporting DC, use of one* SCG, *aggregated with the MCG, for increased bandwidth;*
- *Network controlled mobility within NR and to*/*from E-UTRA;*
- *The UE:*
   - *Monitors Short Messages transmitted with P-RNTI over DCI (see clause* 6.5), *if configured;*
   - *Monitors control channels associated with the shared data channel to determine if data is scheduled for it;*
   - *Provides channel quality and feedback information;*
   - *Performs neighbouring cell measurements and measurement reporting;*
   - *Acquires system information."*

According to the characteristics of the RRC Inactive state, for the Inactive UE the connection (both for user plane and control plane) is maintained with RAN and the core network. More specifically, in RRC Inactive, although the connection still exists, it is suspended, or put differently the connection is not active anymore. On the other hand, in RRC Connected state, the connection exists and is active, e.g. in the sense that it is used for a data transmission. In RRC Idle state, the UE has no RRC connection with the RAN and the core network, which also means that e.g. the radio base station does not have any context of the UE and e.g. does not know the identification of the UE and does not have security parameters relating to the UE to be able to properly decode data transmitted by the UE (security e.g. ensures integrity of the transmitted data). UE context may be available in the core network, but would have to be fetched first by the radio base station.

In addition, the paging mechanism (may also be called e.g. notification mechanism) for user equipments in the radio cell is based on so called radio access network, RAN,-based notification areas (in short RNAs). The radio access network should be aware of the current RNA the user equipment is located in, and the user equipment may assist the gNB to track the UE moving among various RNAs. The RNA can be UE-specific.

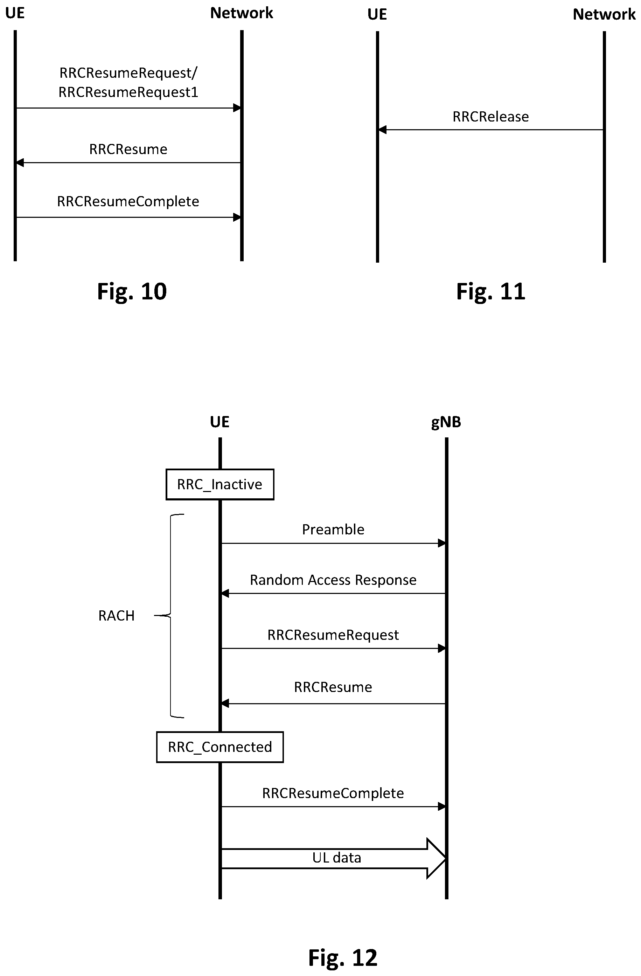

One example of an RRC resume procedure to move the UE from the RRC_Inactive state to the RRC_Connected state (see TS 38.331 section 5.3.13) is explained in the following with reference to Fig. 10. The purpose of this procedure is to resume a suspended RRC connection (may include resuming signaling and data radio bearers) or to perform the RNA update upon the UE moving out of the configured RNA.

The procedure allows to transmit either the RRCResumeRequest message or the RRCResumeRequest1 message. When transmitting the RRCResumeRequest message, the short I-RNTI (e.g. truncated I-RNTI) is used as the UE identity (exemplary termed *"resumeldentity"*). When transmitting the RRCResumeRequest1 message, the full I-RNTI is used as the UE identity (exemplary termed *"resumeldentity"*). UE checks the indication *"useFullResumeID"* in SIB1 and determines to transmit either the RRCResumeRequest or the RRCResumeRequest1 message. If the *"useFullResumeID"* indicates "true", the UE will transmit RRCResumeRequest1 with full I-RNTI; otherwise, the UE will transmit RRCResumeRequest with short I-RNTI. The actions the UE performs for the RRC Resume procedure (see section 5.3.13.4 of TS 38.331) include resuming the SRB2 and all DRBs (which were suspended when entering the RRC Inactive state, see below release procedure).

One example of a subsequent RRC connection release procedure to transition the UE from the RRC_Connected state to the RRC Inactive state (see TS 38.331 section 5.3.8) is explained in the following with reference to **Fig. 11****.** The purpose of this procedure is to release the RRC connection or to suspend the RRC connection. For instance, the network initiates the RRC connection release procedure to transit a UE in RRC_CONNECTED to RRC_IDLE or to RRC_INACTIVE. The actions the UE performs for the RRC Connection Release procedure (see section 5.3.8.3 of TS 38.331) include suspending all SRB(s) (Signaling Radio Bearers) and DRB(s) (Data Radio Bearers) except SRB0, in case the release is done with suspend (e.g. "RRCRelease includes *suspendConfig"*). Correspondingly, the UE in RRC Inactive state does not have any non-suspended or active DRB (UE only has suspended DRBs). SRB0, which is kept active, even in the RRC Inactive state, can be used by the UE e.g. for performing the RACH procedure, e.g. when carrying RRC messages, such as the RRCResumeRequest, RRCResumeRequest1, RRCSetupRequest.

In an exemplary implementation in 5G NR, signaling radio bearers (see TS 38.331 section 4.2.2) are defined as radio bearers that are used only for the transmission of RRC and NAS messages, and may include SRB0 (for RRC messages using the CCCH logical channel), SRB1, SRB2, and SRB3. In an exemplary implementation in 5G NR (see TS 38.300 section 12.1), the NG-RAN establishes at least one DRB together with the PDU Session, and additional DRB(s) for QoS flow(s) of that PDU session can be subsequently configured. The NG-RAN then maps packets belonging to different PDU sessions to different DRBs. NG-RAN and 5GC ensure quality of service (e.g. reliability and target delay) by mapping packets to appropriate QoS Flows and DRBs. Put differently, a DRB is used to carry user data associated with a PDU session. Radio bearers are categorized into two groups: data radio bearers (DRB) for user plane data and signaling radio bearers (SRB) for control plane data.

### Small-data transmissions

The characteristics of the small-data transmissions that are targeted in this disclosure refer to any service with the characteristics that data bursts in UL/DL are small and optionally rather infrequent with no strict requirements on delay or periodicity, optionally with a certain delay requirement. For instance, a single data transmission that it so small that it can be sent by the UE in one transmission (e.g. in RACH, see below) can be considered a small-data transmission. Typical non-limiting examples of traffic characteristics are captured in the following table (see TR 25.705 v13.0.0 section 5).

### Characteristics of the small-data transmissions

| **Traffic parameter** | **Value** |
|---|---|
| application packet size | 100 bytes (UL); 100 bytes (DL) |
| latency¹ | 5s to 30min; 1 hour for no mobility (static, pedestrian) |
| frequency | every minute and up to monthly |
| NOTE 1: latency is the duration from when the packet arrives at the buffer until it is completely transmitted (delay tolerance of the application). | |

Another possible exemplary definitions can depend on the configuration of the gNB. For instance, the gNB can define that data below a certain threshold (e.g. 1000 kbyte) can be considered small-data, whereas data above that threshold is not to be considered small-data. This threshold could e.g. be defined in connection with the buffer status.

Alternatively, a definition of what small-data is could also be fixed by a suitable standard, e.g. providing a similar data amount threshold as described above.

### Small-data transmission by UE in RRC Inactive state

In more detail, 5G NR supports the RRC_INACTIVE state, and UEs with infrequent (periodic and/or non-periodic) data transmission are generally maintained by the network in the RRC_INACTIVE state. Until Rel-16, the RRC_INACTIVE state does not support data transmission. Hence, the UE has to resume the connection (e.g. move to RRC_CONNECTED state) for any DL (MobileTerminated) and UL (MobileOriginated) data. Connection setup (or resume) and subsequently release to RRC_INACTIVE state would have to happen for each data transmission, however small and infrequent the data packets are. This results in unnecessary power consumption and signalling overhead.

Specific examples of small and infrequent data traffic include the following use cases:
- Smartphone applications:
   o Traffic from Instant Messaging services (whatsapp, QQ, wechat etc.)
   ∘ Heart-beat/keep-alive traffic from IM/email clients and other apps
   ∘ Push notifications from various applications

- Non-smartphone applications:
   ∘ Traffic from wearables (periodic positioning information etc.)
   ∘ sensors (Industrial Wireless Sensor Networks transmitting temperature, pressure readings periodically or in an event triggered manner etc.)
   ∘ smart meters and smart meter networks sending periodic meter readings

An exemplary procedure of the prior art (in this case a 5G-NR-compliant prior art solution) to enable a UE in the RRC Inactive state to transmit (small) data will be briefly explained in the following with reference to Fig. 12. As apparent from the figure, the UE is assumed to be in RRC_Inactive state, which may e.g. involve that the UE (and gNB) has all data radio bearers suspended, and that no data can be transmitted to the gNB. In order to enable the UE to transmit data, the UE has to be first transitioned into the RRC Connected state, which can be done by the UE requesting to resume the RRC connection (here transmitting *RRCResumeRequest*) as part of the RACH procedure (in Fig. 12, e.g. using the 4-step RACH procedure).

In detail, the UE may transmit the preamble to the current gNB, then receives a corresponding random access response with a small UL grant of radio resources, which are used by the UE to transmit the RRCResumeRequest message as msg3 of the RACH procedure.

Finally, the new gNB provides the RRCResume message to the UE, which in turn then transitions to the RRC Connected state, including the resumption of all data radio bearers. In RRC_Connected state, the UE is then able to transmit the UL data.

It is not yet defined how and when the gNB decides that a UE should indeed by transitioned to RRC_CONNECTED state. The control in said respect is likely to still rest with the gNB, although the UE might request to resume the RRC connection. One exemplar possibility is that the gNB takes into account the buffer status report, which the UE transmits e.g. in the Msg 3 or MsgA, to decide whether the UE should transition to the RRC_CONNECTED state or not. The buffer status report indicates the actual amount of data in the UE buffer. For instance, if the buffer status report indicates a large amount of data in the UE buffer, the gNB might decide to transition the UE from RRC_INACTIVE to RRC_CONNECTED state. On the other hand, if the buffer status report indicates only little amount of data in the UE buffer, the gNB might decide to keep the UE in the RRC_INACTIVE state.

As can be appreciated from the description of Fig. 12, the above process, according to which the UE first needs to transition from the inactive state to the connected state such that the UE can send any user data in the uplink, introduces latency and consumes significant UE power for each transmission of user data. Moreover, the signaling overhead caused for INACTIVE-state UEs when transmitting small data packets is a general problem, and will even be exacerbated with more UEs in 5G NR.

Therefore, 3GPP is intending to enable the RRC_Inactive UE to transmit small data in the uplink without changing the UE state. In general, any device that has intermittent small data packets, when in the INACTIVE state, will benefit from enabling small-data transmission in the INACTIVE state.

In 3GPP, however, no final agreements have been reached for a standardized method on how the transmission of (small) data can be enabled for a UE that stays in the RRC Inactive state.

### Further improvements

The inventors have identified potential problems in connection with the above.

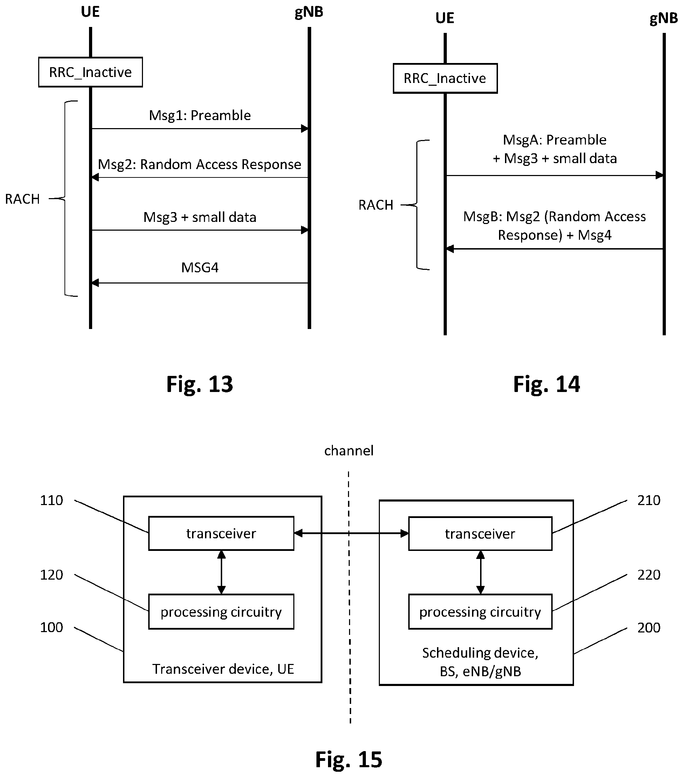

One possibility for a UE to transmit small data in the uplink when still in RRC_INACTIVE state is to use the RACH procedure. Although the RACH procedure has been discussed as a possible basis for small-data uplink transmissions by UEs in RRC_INACTIVE state, no agreements have been reached in the 3GPP and no 3GPP standards seems to provide definitions in said respect. Consequently, the following assumptions, made for Fig. 13 and 14 and also for subsequently describing the concepts, solutions and variants of the invention, are to be considered only as exemplary and not as limiting the small-data uplink transmission according to the invention. For instance, a non-RACH-based transmission of the small data in the uplink is also possible.

Moreover, even when assuming a RACH-based small-data uplink transmission as an example, the UE can use either the 2-step RACH or 4-step RACH to send small data in the uplink, (see MsgA or Msg3).

Simplified and exemplary RACH-based small-data uplink transmission procedures are illustrated in Fig. 13 and 14. **Fig. 13** assumes a 4-step RACH procedure and illustrates how the UE transmits the small data with the Msg3. **Fig. 14** assumes a 2-step RACH procedure and illustrates how the UE transmits the small data with the MsgA.

According to one example, the control message and the small data are transmitted together to the base station, e.g. together in the same transport block, where the UE builds the transport block using the resources and multiplexing data and signaling together in the same transport block of the MAC layer. For instance, the control message (e.g. the *RRCResumeRequest*) of Msg3 or MsgA can be transmitted via a signaling connection (e.g. a signaling radio bearer; e.g. the SRB0) that is maintained for a UE in the RRC_Inactive state (maintained by both the UE and the gNB). Furthermore, the small data of Msg3 or MsgA can be transmitted e.g. via a data connection (e.g. a data radio bearer) that is maintained for a UE in the RRC_Inactive state (maintained by both the UE and the gNB).

According to one specific example of a RACH-based small-data uplink transmission, in order to allow small-data transmission in the RACH procedure, the network or network node may be enabled to configure multiple transport block sizes (TB sizes) for the small-data uplink transmission (PUSCH transmission; e.g. small-data transmission). The transport block sizes could e.g. be associated respectively with different RACH preambles. For instance, each one of different TB sizes is associated with or corresponds to a specific RACH preamble, as illustrated by the following Table 1.

**Table 1**

| **TB Size(bits)** | **RACH preamble** |
|---|---|
| X₁ | Z₁ |
| X₂ | Z₂ |
| X₃ | Z₃ |
| | |

Such an information could be e.g. broadcast by the gNB in the system information.

Accordingly, a UE may select a TB size (and, accordingly, the corresponding preamble) based on it buffers status (i.e. the data volume of small data that is to be transmitted). For instance, if a UE has a data volume Y to transmit, for which the TB size X₁ from Table 1 is suitable, the UE selects RACH preamble Z₁. This could apply to both the 4-step and 2-step RACH procedure.

Then, in case of the four-step RACH, the network (e.g. gNB) may provide the actual TB size in Msg3, e.g. a single TB size, such as the same X₁, or another TB size, such as X₂ or X₃. According to a different solution, the gNB may provide several options in Msg3, such as X₁=100 bits, X₂=200 bits, or X₃=300 bits, and the UE then selects the suitable TB size among those indicated by the gNB in the Msg3. The UE then uses the indicated or selected TB size to perform the small-data uplink transmission in Msg3.

On the other hand, for the 2-step RACH, the UE selects the TB size (from among a set of possible TB sizes) according to the amount of small-data to be transmitted. The UE then uses the selected TB size to perform the small-data uplink transmission in MsgA (the gNB is not able to indicate another TB size, in contrast to the 4-step RACH).

According to still another possible solution, the gNB might partition the PRACH resources so as to create a small-data-specific partition of PRACH resources that the UE can use for small-data uplink transmissions. For instance, a small-data-specific group of preambles is defined by the gNB. Such information could be provided by the gNB to all UEs in its cell using system information.

Correspondingly, the UE selects such a small-data-specific preamble when it determines to transmit small-data in the uplink. The gNB learns that the UE wants to transmit small data based on the selected preamble being a small-data-specific preamble. In return, the gNB might e.g. indicate a larger size of grant in Msg3 or indicates a plurality of different grant sizes in Msg3 (see above example of several options of TB sizes). The UE thus can use the indicated grant size in Msg3 to transmit the uplink data.

Another possible parameter that can be carried in the system information is a possible maximum allocated grant size of uplink data for the Msg3. In such an exemplary solution, if the data the UE wants to transmit stays below the maximum grant size, the UE can select from the available TB sizes in the small-data-specific PRACH resources and transmit same in the inactive state using the Msg3. Otherwise, if the data the UE wants to transmit is above the maximum grant size, the UE would have to send the data in the connected state and thus proceeds to request the transition from the gNB.

For instance, if the maximum grant size broadcast by the gNB in the system information is 800 kB, and the UE has 600 kB in its buffer, the UE will proceed to transmit the data in the inactive state, e.g. by using the RACH procedure. The gNB might allocate 400 kB in Msg2. The UE transmits 400 kB of the data in Msg3 and sends a buffer status report to the base station to indicate the remaining 200 kB in the buffer. The gNB might then transmit a further grant of uplink resource for use by the UE to transmit the remaining 200 kB.

In summary, a possible exemplary implementation of a small-data uplink transmission for RRC_INACTIVE UEs is possible and could be e.g. based on the RACH procedure, be it a 2-step or 4-step RACH procedure.

However, the inventors have also identified potential drawbacks when allowing small-data uplink transmissions for a UE in the RRC_INACTIVE state. Uplink transmissions in the RRC_INACTIVE state are typically disadvantageous compared to uplink transmissions in the RRC_CONNECTED state. For instance, in the above exemplary RACH-based solutions, the UE has to successfully perform a complete RACH procedure. Furthermore, the 4-step or 2-step RACH procedures used by the RRC_INACTIVE UE are contention-based, in that the preamble is selected by the UE from a pool of preambles (and possibly by some other UE) and in that the radio resources for the transmissions are selected by the UE from a pool of radio resources (and possibly selected by some other UE), which may cause a contention and may result in an unsuccessful RACH and/or small-data uplink transmission. This is turn may result in an increased power consumption as well as an increased signaling overhead.

The inventors have identified that in specific scenarios the drawbacks for the small-data uplink transmission for RRC_INACTIVE UEs may outweigh the drawbacks of transitioning the RRC_INACTIVE UE to the RRC_CONNECTED state, where the small-data uplink transmission is more likely to not suffer from the just-described drawbacks.

For instance, a scenario is assumed where an RRC_INACTIVE UE performs frequently such small-data uplink transmissions, but is not transitioned by the gNB to the RRC_CONNECTED state. As mentioned above, it is not specified in the 3GPP standards how and when the gNB decides to transition the RRC_INACTIVE UE to the RRC_CONNECTED state. One possibility could be that the gNB determines that there is more small data based on the buffer status report that the UE transmits (e.g. the Msg 3 or MsgA) and thus decides on that basis that the UE should transition to the RRC_CONNECTED state.

However, the UE might not transmit the buffer status report to the gNB, in case the complete small data is carried in the Msg3 or MsgA. As a result, the gNB might not have sufficient information to decide that the UE should be transitioned to RRC_CONNNECTED. In such a case, the UE would remain in RRC_INACTIVE and continue sending small-data in the uplink on a frequent basis.

Thus, the UE would frequently perform such RACH procedures for the small-data uplink transmissions, which would cause unnecessary power consumption and signaling overhead. In such scenarios, it would be beneficial to allow small-data transmissions in RRC_INACTIVE state with reduced signaling overhead and delay.

The present invention relates to solutions according to which a UE in the RRC_INACTIVE state is allowed to transmit data (e.g. small data) (without the immediate need to change the UE state into connected), while signaling overhead, delay and power consumption is reduced.

The inventors have thus identified the possibility of providing an improved small-data transmission procedure that allows avoiding or mitigating the above-identified problems.

### Embodiments

In the following, UEs, base stations, and procedures to meet these needs will be described for the new radio access technology envisioned for the 5G mobile communication systems, but which may also be used in LTE mobile communication systems. Different implementations and variants will be explained as well. The following disclosure was facilitated by the discussions and findings as described above and may for example be based at least on part thereof.

In general, it should be noted that many assumptions have been made herein so as to be able to explain the principles underlying the present disclosure in a clear and understandable manner. These assumptions are however to be understood as merely examples made herein for illustration purposes that should not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next 3GPP 5G communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology, but should be more broadly understood in terms of functions and concepts that underlie the functioning and principles of the present disclosure.

For instance, a **transceiver device** or **mobile station** or **mobile node** or **user terminal** or **user equipment (UE)** is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term **"scheduling device"** or **"base station"** or **"radio base station"** here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB.

Communication between the UE and the scheduling device is typically standardized and may be defined by different layers, such as PHY, MAC, RRC etc. (see above background discussion).

The term **"small data"** used in the application is to be broadly understood as data that the UE and the base station agree on being small, e.g. versus non-small. For instance, whether data is to be considered small-data or not, can be defined by a base station by setting a data amount threshold. Alternatively, what constitutes small-data can be defined by telecom standard, e.g. by setting a data amount threshold.

The term **"inactive state"** used in the application is to be broadly understood as a state in which regular data exchange between the UE and the base station is not possible. The UE, when in inactive state, may not have actively-used data connections, but still has one or more inactive data connections (e.g. could also be called existent but not currently-used) that allow a (small) data transmission without the need to resume the data connection first. For sake of completion, the UE in the idle state does not have data connections over which the UE could transmit data to the base station, while the UE in connected state has one or more active data connections that can be immediately used to carry data to the base station.

The term **"characteristic",** when used in connected with the small data, should be understood broadly as referring to a property that characterizes the small data. For instance, the characteristic relates to a traffic pattern expected for subsequent transmissions of the small data; put differently, whether or not a periodic transmission of the small data is expected to be performed. In another solution, the characteristic may further relate to the data itself, such as a priority of the data or type of the data or an expected incoming time interval (can be different from the actual frequency of the small-data transmission).

The term **"frequency",** when used in connection with the transmission of small data, is generally to be understood as the number of times (quantity) per time period that a transmission of small data is performed, such as x times in y ms. Unless indicated differently, it should not be understood as a frequency in a frequency domain of time-frequency radio resources (such as a frequency band, MHz, etc.).

The term **"quantity",** when used in connection with the transmission of small data, is to be understood as referring to the number of times that a transmission of small data is performed, e.g. x times.

**Fig. 15** illustrates a general, simplified and exemplary block diagram of a user equipment 100 (also termed communication device) and a scheduling device 200 (here exemplarily assumed to be located in the base station, e.g. the eLTE eNB (alternatively termed ng-eNB) or the gNB in 5G NR). The UE 100 and eNB/gNB 200 are communicating with each other over a (wireless) physical channel respectively using the transceivers 110, 210.

The transceiver device 100 may comprise a transceiver 110 and processing circuitry 120. The transceiver 110 in turn may comprise and/or function as a receiver and a transmitter. The processing circuitry 120 may be one or more pieces of hardware such as one or more processors or any LSIs. Between the transceiver 110 and the processing circuitry 120 there may be input/output point (or node) over which the processing circuitry 120, when in operation, can control the transceiver 110, i.e. control the receiver and/or the transmitter and exchange reception/transmission data. The transceiver 110, as the transmitter and receiver, may include the RF (radio frequency) front including one or more antennas, amplifiers, RF modulators/demodulators and the like. The processing circuitry 120 may implement control tasks such as controlling the transceiver 110 to transmit user data and control data provided by the processing circuitry 120 and/or receive user data and control data, which is further processed by the processing circuitry 120. The processing circuitry 120 may also be responsible for performing other processes such as determining, deciding, calculating, measuring, etc. The transmitter may be responsible for performing the process of transmitting and other processes related thereto. The receiver may be responsible for performing the process of receiving and other processes related thereto, such as monitoring a channel.

An improved small-data transmission procedure will be described in the following. In said connection, an improved UE 100 and an improved base station 200 are presented, which participate in the improved small-data transmission procedure. Corresponding methods for the UE 100 behavior and the base station 200 behavior are provided as well.

The transceiver device 100 may include circuitry for determining that a transmission of small data is to be performed by the transceiver device 100 to a scheduling device 200, circuitry for obtaining a characteristic relating to the small data, and a transceiver for performing the transmission of the small data and a characteristic indicator indicating the characteristic relating to the small data to the scheduling device.

In the present case as will become apparent from the below disclosure, the receiver of the transceiver device 100 can thus be exemplarily configured to at least partly perform one or more of receiving configuration information from the scheduling device, of receiving a transceiver device-state instruction, etc.

Furthermore, in the present case as will become apparent from the below disclosure, the transmitter of the transceiver device 100 can thus be exemplarily configured to at least partly perform one or more of transmitting small data, of transmitting a characteristic indicator, etc.

One solution as will be disclosed in more detail further below is implemented by a transceiver device 100 that includes circuitry 120 that determines that a transmission of small data is to be performed by the transceiver device 100 to a scheduling device 200. The transceiver device 100 is in an inactive state out of a connected state, an idle state and the inactive state. The circuitry 120 obtains a characteristic relating to the small data. The transceiver device 100 further comprises a transceiver 110 that performs the transmission of the small data and a characteristic indicator indicating the characteristic relating to the small data to the scheduling device 200.

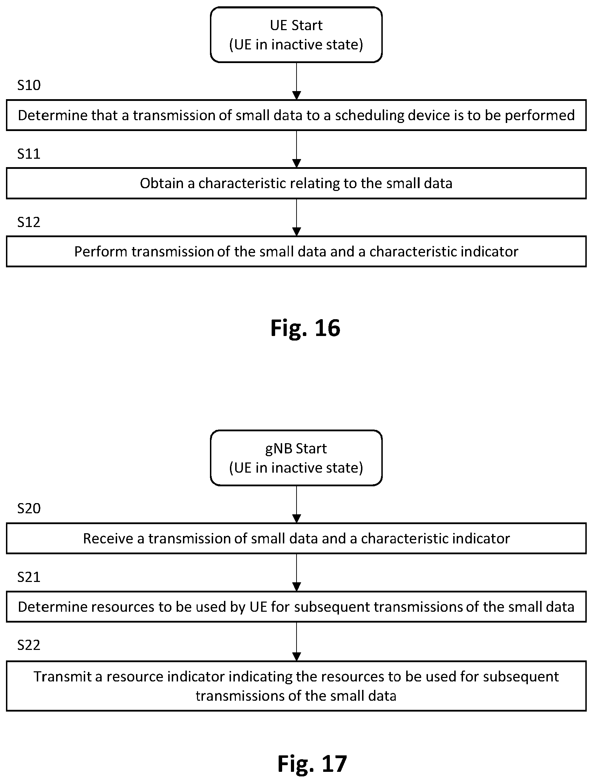

A corresponding sequence diagram for a transceiver device behavior in line with the above-discussed transceiver device 100 UE is defined in the following and illustrated in Fig. 16. The method comprises the following steps performed by a transceiver device:
- determining S10 that a transmission of small data is to be performed by the transceiver device 100 to a scheduling device 200, wherein the transceiver device 100 is in an inactive state out of a connected state, an idle state and the inactive state;
- obtaining S11 a characteristic relating to the small data; and
- performing S12 the transmission of the small data and a characteristic indicator indicating the characteristic relating to the small data.

According to this improved small-data transmission procedure, the transceiver device can assist in allowing to reduce the signaling overhead and the power consumption by indicating to the scheduling device 200 the characteristic of the small data. For instance, the transceiver device 100 follows a specific defined behavior when transmitting the characteristic indicator, such that the scheduling device 200 can then decide thereon, whether or not to schedule resources for subsequent transmissions of the small data while the transceiver device 100 is not transitioned to the connected state.

As already apparent from above, the improved small-data transmission procedure also provides an improved scheduling device 200. The scheduling device 200 includes a receiver for receiving small-data transmission(s), circuitry 220 for determining resources to be used by a transceiver device 100 for subsequent transmissions of small data, and a transceiver 210 for transmitting a resource indicator.

In the present case as will become apparent from the below disclosure, the receiver of the scheduling device 200 is configured to at least partly perform one or more of receiving small data from the transceiver device 100, and of receiving a characteristic indicator from the transceiver device 100, etc.

In the present case as will become apparent from the below disclosure, the circuitry 220 of the scheduling device 200 can thus be exemplarily configured to at least partly perform one or more of determining resources to be used by the transceiver device 100 for subsequent transmissions of the small data, etc.

In the present case as will become apparent from the below disclosure, the transmitter of the scheduling device 200 can thus be exemplarily configured to at least partly perform one or more of transmitting a resource indicator to the transceiver device 100, etc.

One solution as will be disclosed in more detail further below is implemented by a scheduling device 200 that includes the following. A transceiver 210 of the scheduling device 200 receives a transmission of small data from a transceiver device 100 and a characteristic indicator indicating a characteristic relating to the small data from a transceiver device 100, wherein the transceiver device 100 is in an inactive state out of a connected state, an idle state and the inactive state. Circuitry 220 of the scheduling device 200 determines resources to be used by the transceiver device 100 for subsequent transmissions of the small data, based on the characteristic relating to the small data. The transceiver 210 transmits a resource indicator indicating the resources to be used by the transceiver device 100 for subsequent transmissions of the small data.

A corresponding sequence diagram for an exemplary scheduling device behavior in line with the above-discussed base station is illustrated in **Fig. 17****.** A corresponding method comprises the following steps performed by a scheduling device 200:
- receiving S20 a transmission of small data and a characteristic indicator indicating a characteristic relating to the small data from a transceiver device 100, wherein the transceiver device 100 is in an inactive state out of a connected state, an idle state and the inactive state;
- determining S21 resources to be used by the transceiver device 100 for subsequent transmissions of the small data, based on the characteristic relating to the small data; and
- transmitting S22 a resource indicator indicating the resources to be used by the transceiver device 100 for subsequent transmissions of the small data.

Correspondingly, the improved scheduling device 200 participates in the improved small-data transmission procedure so as to facilitate reducing the signaling overhead and power consumption, by determining resources to be used by the transceiver device 100 for subsequent transmissions of the small data.

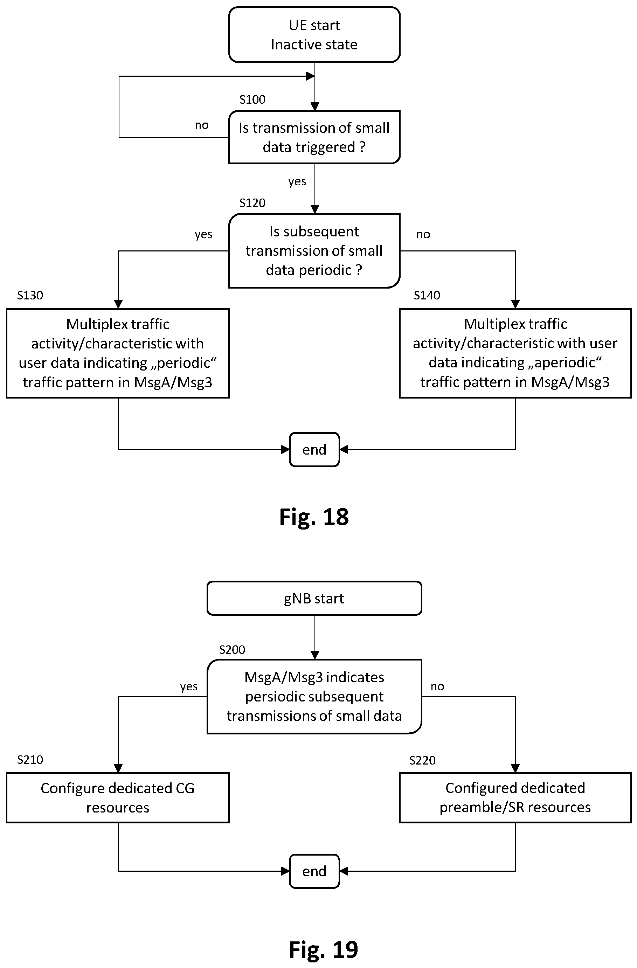

One variant solution of the improved small-data transmission procedure is exemplary illustrated in **Fig. 18****,** which shows method performed by a transceiver device according to an embodiment. Initially, the transceiver device is in an RRC_INACTIVE state out of the RRC_INACTIVE, an RRC_IDLE and an RRC_CONNECTED state.

In step S100, it is determined whether a transmission of small data (SDT: small data transmission) has been triggered and/or performed. In a case where the SDT has been triggered (yes in step S100), a characteristic of the small data is obtained. In the present embodiment, it is obtained whether or not subsequent transmissions of the small data are periodic or aperiodic. In a case where subsequent transmissions of the small data are expected to be periodic (yes in step S120), the method proceeds to step S130. In a case where the subsequent transmissions of the small data is not periodic (i.e. aperiodic) (no in step S120), the method proceeds to step S140.

In step S130, the circuitry of the transceiver device multiplexes a characteristic indicator indicating the traffic pattern (which is also called traffic activity/characteristic) as being periodic with the small data to be transmitted. Subsequently the small data and the characteristic indicator is transmitted to the scheduling device. In the present embodiment, the small data and the characteristic indicator indicating "periodic" is transmitted in MsgA or Msg3 in a RACH procedure as illustrated in Fig. 13 or 14, for example.

In step S140, the circuitry of the transceiver device multiplexes a characteristic indicator indicating the traffic pattern as being aperiodic with the small data to be transmitted. Subsequently the small data and the characteristic indicator is transmitted to the scheduling device. In the present embodiment, the small data and the characteristic indicator indicating "aperiodic" is transmitted in MsgA or Msg3 in a RACH procedure as illustrated in Fig. 13 or 14, for example.

A simplified behavior of the scheduling device is illustrated in **Fig. 19****,** in form of a sequence diagram. As apparent from the figure, the scheduling device receives a transmission of small data and a characteristic indicator indicating that subsequent transmissions of the small data is either periodic or aperiodic. The small data and the characteristic indicator are received in the framework of a RACH procedure as illustrated in Fig. 13 and 14, for example. Specifically, the small data and the characteristic indicator are received in a MsgA or Msg3 of a two-step or a four step RACH procedure.

In step S200, it is determined whether the characteristic indicator indicates that the subsequent transmissions of the small data are periodic. In a case where the characteristic indicator indicates that the subsequent transmissions of the small data are periodic (yes in step S200), the method proceeds to step S210. In a case where the characteristic indicator indicates that the subsequent transmissions of the small data are not periodic (i.e. aperiodic) (no in step S200), the method proceeds to step S220.

In step S210, the scheduling device determines resources to be used by the transceiver device for subsequent transmissions of the small data. Specifically, as the characteristic relating to the small data is periodic, dedicated configured grant resources are determined as the resources to be used for subsequent transmissions of the small data.

In step S220, the scheduling device determines resources to be used by the transceiver device for subsequent transmissions of the small data. Specifically, as the characteristic relating to the small data is aperiodic, a dedicated preamble or dedicated scheduling request (SR) resources are determined as the resources to be used for subsequent transmissions of the small data. Subsequently, the scheduling device transmits a resource indicator indicating the determined resources to the transceiver device.

That is, according to the above methods illustrated in Figs. 18 and 19, when the transceiver device triggers an SDT procedure and transmits small data (e.g. user data) in Msg3/MsgA of a RACH procedure, information indicating an expected traffic pattern of subsequent transmissions of small data is provided to the scheduling device. Specifically, the characteristic related to the small data represents a characteristic of a traffic pattern of expected subsequent transmissions of the small data. Said characteristic of the traffic pattern indicates whether the subsequent transmissions of the small data is periodic or aperiodic.

In this respect, it is noted that a subsequent transmission of the small data represents a transmission of small data following an initial transmission of small data. That is, the subsequent transmission of the small data is performed after the initial transmission of the small data. The content of the small data transmitted in a subsequent transmission of the small data is not necessarily equal to the content of the small data transmitted in the initial transmission of the small data. Instead the content of the small data transmitted in the framework of a subsequent transmission of the small data may be different from the content of the small data transmitted in the framework of the initial transmission of the small data. For example, the content of the (initially and subsequently transmitted) small data may relate to reading of a same sensor, wherein, however, the reading itself (i.e. the value measured by the sensor) may be different. In other words, the small data subsequently transmitted may be small data associated with small data initially transmitted.

The signaled information regarding the characteristic relating to the small data (e.g. the information regarding the traffic pattern being periodic or aperiodic) may assist the scheduling device in determining resources to be used by the transceiver device when performing subsequent transmissions of small data.

Further, the transceiver device may use a compact signaling for indicating the characteristic related to the small data. In the present embodiment, for example, the characteristic of the small data may be represented using a single bit within MsgA/Msg3 indicating whether the subsequent transmissions of the small data is expected to be either periodic or aperiodic.

Specifically, in an embodiment, one bit is used to indicate the traffic pattern of subsequent transmissions of the small data, i.e. whether the subsequent transmissions of data are periodic or aperiodic. For example, a bit value "1" may indicate periodic subsequent transmissions of the small data. Correspondingly, a bit value "0" may indicate that the subsequent transmissions of small data are expected to be not periodic (i.e. aperiodic).

The scheduling device may, in response to receiving the characteristic indicator with a value "1", determine dedicated configured grant resources and indicate the determined resources to the transceiver device by transmitting the resource indicator. Correspondingly, the scheduling device may, in response to receiving the characteristic indicator with a value "0", determine a dedicated preamble or SR resources in order to allow the transceiver device to request uplink grants from the scheduling device more easily in a contention-free manner for the subsequent UL data transmissions.

In an embodiment, the characteristic indicator, which may also be referred to as a traffic pattern indicator, may be included in an RRC message (e.g. an RRC resume message or UE assistance information) or a MAC control element, MAC CE.

In NR, for example, the MAC layer may insert so-called MAC control elements (MAC CE) into transport blocks to be transmitted over a transport channel. A MAC CE is used for control signaling, for instance, timing advance commands or random-access response. According to the present disclosure, however, a MAC CE may carry the characteristic indicator, wherein the MAC CE may, for example, indicate whether subsequent transmissions of the small data are periodic or aperiodic.

In an embodiment, the scheduling device determines resources to be used by the transceiver device for subsequent transmission of the small data and, further, determine a time period during which the scheduled resources will be valid for the transceiver device. For instance, the circuitry determines the time period and the transceiver transmits a time indicator indicating said time period. The transceiver device receives the time indicator and starts a timer with a runtime according to the indicated time period. Further, the transceiver device may perform the subsequent transmissions of the small data using resources indicated by the resource indicator while the timer has not expired.

When the timer has expired and small data is to be transmitted, the transceiver device may again transmit the small data and a characteristic indicator indicating the characteristic relating to the small data in the framework of a RACH procedure as illustrated in Fig. 13 and 14.

The time duration is not limited to being determined and transmitted by the scheduling device, but may be configured by the network (e.g. using an RRC Release Message) or may be predetermined, for instance, in terms of a standard specification.

The characteristic of the data includes a characteristic of a traffic pattern of subsequent transmissions of the small data. For instance, the traffic pattern may be represented by a typical incoming time interval that can be expected for the data. For instance, the typical incoming time interval can be different for different data, e.g. based on the origin of the data or based on a higher-layer application that generates the data, and thus directly influences how frequently a small-data transmission would have to be performed by the UE. For instance, assuming the data originates from a sensor, the typical incoming time interval can depend on the type of sensor. The transceiver device may know the typical incoming time interval for the connected sensor.

In particular, a short incoming time interval would likely lead to frequent small-data transmissions, where it is beneficial that scheduled grant resources are granted. On the other hand, long incoming time intervals and/or aperiodic time intervals will likely lead to comparatively infrequent small-data transmissions, where the transceiver device would be indicated with a dedicated preamble or a dedicated SR resource.

According to one variant, the transceiver device is informed about the characteristic of the incoming data from higher layers in the transceiver device. For instance, the application generating the data (to be carried by the small-data transmission) informs a lower layer responsible for performing the above-described improved small-data-transmission procedure. For instance, the higher layer is typically aware of the higher-layer applications that generate the data to be transmitted (e.g. online game, phone call, web browsing, etc.). Alternatively, the data radio bearers carrying the data can also be used to indicate particular characteristic of the data to be transmitted.

According to a variant, the transceiver device determines a preferred configuration for the subsequent transmissions of the small data in a case where the characteristic relating to the small data is "periodic". The preferred configuration may include one or a more configuration parameters.

For instance, the one or more configuration parameters may include a number of the subsequent transmissions of the small data, a cycle time period of the subsequent transmissions of the small data, and/or an MCS indicator indicating a modulation and coding scheme, MCS, of the subsequent transmissions of the small data.

For instance, the one or more configuration parameters may include one or more parameters according to the following information element excerpt (ConfiguredGrantConfig information element). The definition of the parameters included in the following ConfiguredGrantConfig information element excerpt can be found, for instance, in 3GPP TS 38.331 v16.1.0: "Technical Specification Group Radio Access Network; NR; Radio Resource Control (RRC) protocol specification (Release 16)", section 6.3.2.

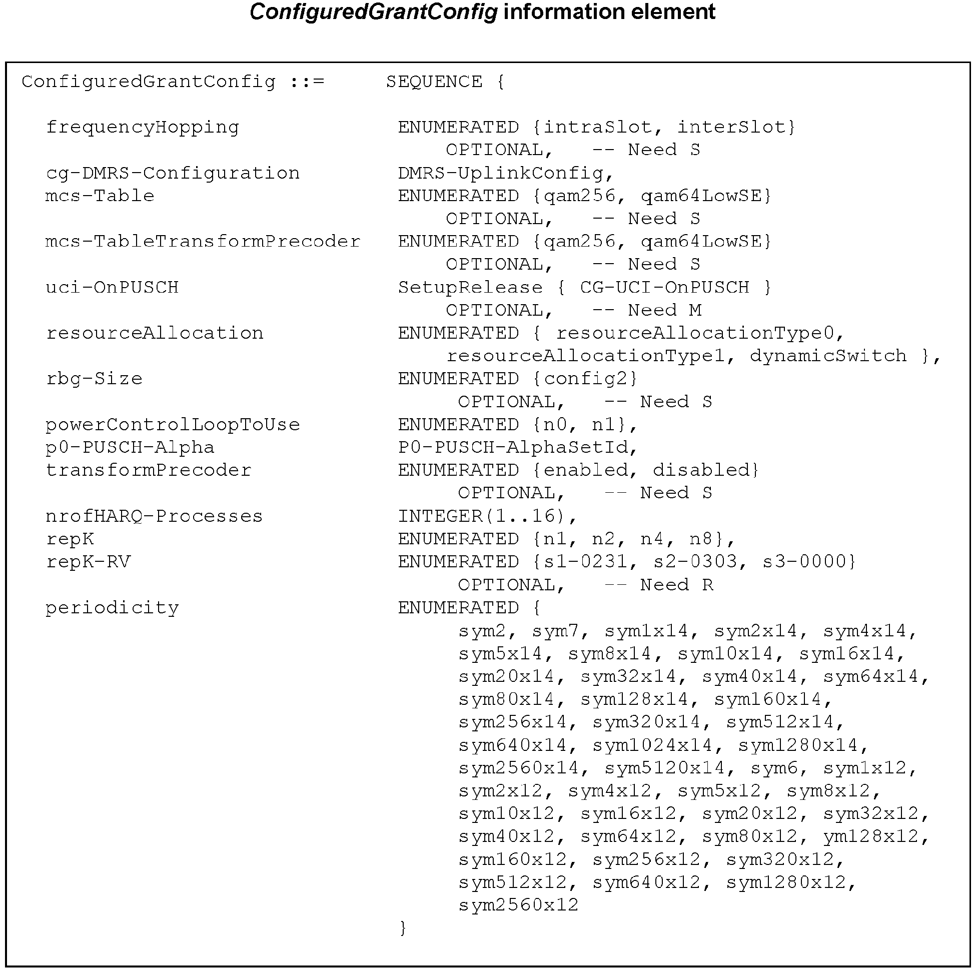

The transceiver device performs the transmission of the small data together with one or more parameter indicators, each indicating a respective one of the configuration parameters to the scheduling device.

For instance, the parameter indicators may include a periodicity indicator indicating a periodicity of the subsequent transmission of the small data. The periodicity may be expressed as a transmission frequency or an interval between the subsequent transmissions of the small data. The parameter indicators may include a repetition indicator indicating a number of subsequent transmissions of the small data. The parameter indicators may include an MCS indicator indicating a modulation and coding scheme of the subsequent transmissions of the small data.

The term modulation and coding scheme encompasses the modulation order and code rate of a transmission. The MCS therefore describes the information data rate of a transmission. See for example 3GPP TS 38.214 (3GPP TS 38.214 v16.1.0: "Technical Specification Group Radio Access Network; NR; Physical layer procedures for data (Release 16)", section 5.1.3.1).

In an embodiment, the values of the one or more configuration parameters are determined so as to be within a predetermined parameter range. Alternatively, the values configuration parameters may be determined/selected from among a set of potential configuration parameters, which may be, for instance, predefined. In other words, a parameter indicator may represent a parameter value by itself, or indicate a parameter value from among a set of parameter values, for instance, by means of an index.

Determining and transmitting the configuration parameters so as to be within a predetermined parameter range provides more flexibility than selecting configuration parameter values from among a predetermined set of values. However, the latter option may allow for a lower data amount to be transmitted.

The scheduling device may receive the small data transmission and the parameter indicators indicating the configuration parameters determined by the transceiver device (and including the characteristic indicator). Further, the circuitry of the scheduling device may determine the resources to be used for subsequent transmissions of the small data using the parameter values indicated by the parameter indicators. For instance, a repetition number, a periodicity (a time interval between scheduled resources) and/or an MCS may be determined for configured grant resources according to a number of the subsequent transmissions of the small data, a cycle time period of the subsequent transmissions of the small data, and/or an MCS indicator indicating a modulation and coding scheme, MCS, of the subsequent transmissions of the small data.

According to a variant, the transceiver device obtains a signal level and/or quality of a signal transmitted by the scheduling device. Further, the transceiver device performs the transmission of the small data and a quality indicator indicating the obtained signal level and/or quality.

For instance the transceiver device performs measurements of signal level/quality in terms of a measurement of RSSI, RSRP and calculation of RSRQ. Further, the transceiver device may transmit the quality indicator indicating the RSRP and/or the RSRQ to the scheduling device together with the characteristic indicator indicating the characteristic relating to the small data.

The scheduling device may receive the transmission of the small data, the characteristic indicator and the quality indicator and determine resources to be used by the transceiver device for the subsequent transmissions of the small data. In this process, the scheduling device may determine the resources using the signal level and/or quality indicated by the quality indicator.

For instance, the scheduling device can configure a larger number of CG repetitions and a more robust CG-MCS configuration in a case where the signal level/quality indicates a weak signal strength. This may be implemented by setting a determined time period indicating the validity of CG resources to a larger value.

For example, in a case where the indicated signal level/quality is above a certain threshold, the scheduling device determines a first number of CG repetitions and, in a case where the indicated signal level/quality is equal to or below the threshold, the scheduling device determines a second number larger than the first number of CG repetitions.

For example, in a similar manner, in a case where the indicated signal level/quality is above a certain (second) threshold, the scheduling device determines a first CG-MCS of CG repetitions and, in a case where the indicated signal level/quality is equal to or below the (second) threshold, the scheduling device determines a second CG-MCS different from the first CG-MCS. The threshold used for MCS determination may be equal to or different from the threshold used for determination of the number of CG repetitions.

According to a variant, the circuitry of the transceiver device determines a priority level of the subsequent transmissions of the small data. Further, the transceiver device performs the transmission of the small data and a priority indicator indicating the priority level of the subsequent transmissions of the small data.

For instance, the priority levels that the transceiver device may determine as the priority level of the subsequent transmissions of the small data are configured by a scheduling device. For example, when a logical channel (LCH) is configured for the transceiver device, a priority level may be associated therewith.

That is, for each logical channel configured for the transceiver device, a corresponding priority level may be associated therewith. The transceiver device determines the priority level of the subsequent transmissions of the small data based on the priority levels of configured LCHs. For example, a priority level corresponding to a priority level of a LCH, through which the subsequent transmissions of the small data should be performed, may be associated with the subsequent transmissions of the small data. Hence, the priority indicator transmitted to the scheduling device may indicate the priority level of the LCH through which the subsequent transmissions of the small data are to be performed.

In a case where subsequent transmissions of the small data are expected to be performed through two or more LCHs, the transceiver device may associate the subsequent transmissions of the small data with a priority level corresponding to the highest priority level of the priority levels of said two or more LCHs.

By providing the scheduling device with a priority level associated with subsequent transmissions of the small data, the scheduling device can determine the resources to be used by the transceiver device for the subsequent transmissions of the small data based on the priority level indicated by the priority indicator transmitted by the transceiver device.

For example, if the priority indicator indicates high priority of subsequent transmissions of the small data, the scheduling device can configured dedicated CG resources. On the other hand, if the priority indicator indicates low priority, the scheduling device may determine the either dedicated SR resources or a dedicated preamble, depending on the characteristic indicated by the characteristic indicator, for instance, depending on whether the characteristic indicator indicates a traffic pattern of the subsequent transmission of the small data being "periodic" or "aperiodic" according to the following:
- In a case of high priority subsequent SDT with a periodic traffic pattern, the scheduling device configures dedicated CG resources.
- In a case of high priority subsequent SDT with an aperiodic traffic pattern, the scheduling device configures wither dedicated CG resources or dedicates SR resources.
- In a case of low priority subsequent SDT with a periodic traffic pattern, the scheduling device configures dedicated SR resources.
- In a case of low priority subsequent SDT with an aperiodic traffic pattern, the scheduling device configures a dedicated preamble (of a RACH procedure).

The subsequent SDT may be determined as being of high priority in a case where the indicated priority level is above a priority threshold. Accordingly, the subsequent SDT may be determined as being of low priority in a case where the indicated priority level is equal to or below said priority threshold. The priority threshold may be predetermined or set dynamically by the scheduling device.

In a variant, the transceiver device may itself determine its preferred dedicated resources to be used for subsequent transmissions of the small data. Hence, instead of performing the transmission of the small data and a characteristic indicator indicating a characteristic related to the small data, the circuitry of the transceiver device may determine the preferred dedicated resources.

This may be performed according to any one of the above-described methods for determining dedicated resources, instead of that the determination is performed by the scheduling device, the transceiver device determines the preferred dedicated resources. Subsequently, the transceiver of the transceiver device performs the transmission of the small data and a preferred-resource indicator indicating the determined preferred resources.

The scheduling device receives the transmission of the small data and the preferred-resource indicator and determines resources to be used by the transceiver device for subsequent transmissions of the small data, based on the indicated preferred resources.

For instance, the preferred-resource indicator may indicate whether dedicated preamble, CG or SR resources are preferred by the transceiver device. This may be indicated by the preferred-resource indicator using two bits, wherein bit values "00" may indicate SR resources, bit values "01" indicate CG resources, and bit values "10" indicate a dedicated preamble. However, the present disclosure is not limited thereto, and any other method may be applied for indicating said preferred-resources.

The preferred-resource indicator may be transmitted from the transceiver device to the scheduling device, for instance, via RRC (e.g. RRC resume message or UE assistance information) or MAC CE.

It is noted that the transceiver device may, in addition to the preferred-resource indicator perform the transmission of the small data and a priority indicator as described above, parameter indicators as described above, a quality indicator as described above and/or a priority indicator as described above.

With the above-described apparatuses and methods, a potential mismatch between subsequent transmissions of small data by a transceiver device may be prevented. For instance, if the subsequent transmissions of the small data are aperiodic, the transceiver device may not configure dedicated resources assuming periodic transmissions, which may result in most of the dedicated resources not being used by the transceiver device, which would result in a waste of radio resources. Similarly, if the traffic pattern is periodic, the transceiver device may not configure dedicated resources assuming aperiodic transmission, which would result in the transmissions being delayed, resulting in an increase of data transmission latency.

Hence, by the above apparatuses and methods, the scheduling device may determine and configure resources for subsequent transmissions of the small data according to the expected traffic pattern of the subsequent transmissions, which, in contrast to the above, may reduce latency and reduce the number of unused scheduled resources.

### Further Variants

Numerous solution, variants and implementations of the improved small-data transmission procedure have been described above.

The above described solutions and implementations of the improved small-data-transmission procedure include the transmission of the small data and the characteristic indicator, sometimes without providing details on how exactly the small data and the characteristic indicator can be transmitted. As was already mentioned before, using the RACH procedure can be one of many possible implementations in said respect.

Correspondingly, one exemplary variant is based on a 4-step RACH procedure, where the small data and the characteristic indicator can be transmitted with the third message Msg3 from the UE to the base station. For example, the small data can be transmitted on a corresponding uplink shared channel (such as the PUSCH) and the characteristic indicator can be transmitted on a signaling connection (such as the signaling radio bearer) or on the uplink shared channel too.

Another exemplary variant is based on a 2-step RACH procedure, where the small data and the characteristic indicator can be transmitted with the first message MsgA from the UE to the base station. For example, the preamble of MsgA can be transmitted on the PRACH, and the small data can be transmitted on a corresponding uplink shared channel (such as the PUSCH). The characteristic indicator can be transmitted on a signaling connection (such as the signaling radio bearer) or on the uplink shared channel too.

For instance, a 5G-NR-compliant variant could transmit the small data and the characteristic indicator indication as part of the RACH procedure explained in the corresponding section "Random Access procedure" above.

In the above described solutions and implementations of the improved small-data-transmission procedure, the UE was described to be in the inactive or connected state. According to specific 5G-NR-compliant variants, the UE may be in the RRC_INACTIVE state (corresponds to the above discussed inactive state), the RRC_CONNECTED state (corresponds to the above-discussed connected state) or the RRC_IDLE state (not discussed above).

In the above described solutions and implementations of the improved small-data-transmission procedure, it was described that the UE provides the characteristic indicator to the base station. According to different variants of these solutions, the characteristic indicator is carried in a message of the RRC protocol, or in a MAC Control Element, or in a message for providing UE-assistance information.

According to specific exemplary 5G-NR-compliant variants, the characteristic indicator can be transmitted to the base station as part of the *RRCResumeRequest* message (see e.g. 3GPP TS 38.331 v16.0.0, section 6.2.2). An example of an excerpt of an extended RRCResumeRequest message is provided in the following:

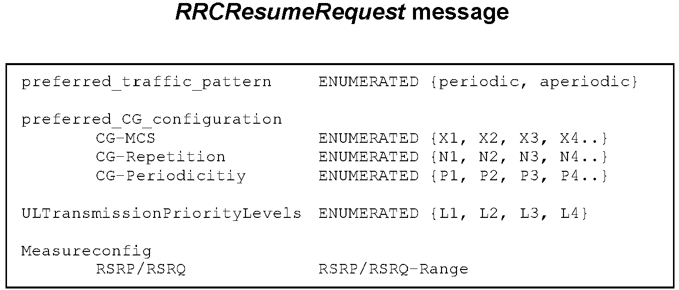

According to the variant that uses the UE assistance information, according to specific exemplary 5G-NR variants, the characteristic indicator can be transmitted as part of the *UEAssistancelnformation* message, already defined by TS 38.331 v16.0.0 section 6.2.2. This *UEAssistancelnformation* message could thus be extended to also include a further information elements, such as the following:

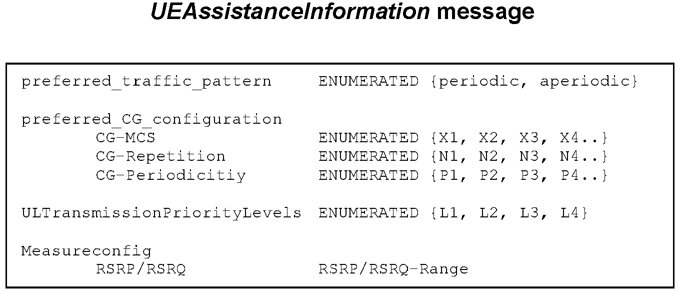

In the above RRCResumeRequest message elements and the UEAssistancelnformation message elements, the characteristic indicator is called "preferred_traffic_pattern" and may indicate that the traffic pattern is either "periodic" or "aperiodic".

Further, in accordance with one or more of above-described variants, the transceiver device may determine configuration parameters and transmit respective parameter indicators indicating a preferred configuration, for instance, of CG resources. In the above RRCResumeRequest message elements and the UEAssistancelnformation message elements, the parameter indicators are labelled "CG-MCS", "CG-Repetition" and "CG-Periodicity" and indicate an MCS, a number of CG repetitions and the periodicity of the CG resources in terms of a value from among a set of potential values.

Further, in accordance with one or more of above-described variants, the transceiver device may determine a priority level of subsequent transmissions of the small data and transmit a respective priority indicator indicating the priority level. In the above RRCResumeRequest message elements and the UEAssistancelnformation message elements, the priority indicator is labelled "ULTransmissionPriorityLevels" and indicates a level of priority in terms of a value from among a set of potential values.

Further, in accordance with one or more of above-described variants, the transceiver device may measure a signal level/quality of signals transmitted by the scheduling device and transmit a respective quality indicator indicating the signal level/quality. In the above RRCResumeRequest message elements and the UEAssistancelnformation message elements, the quality indicator is labelled "RSRP/RSRQ" and indicates an RSRP and/or RSRQ in terms of a value from among corresponding RSRP/RSRQ range.

However, the present disclosure is not limited to above examples, and, for instance, the CG Repetition, CG Periodicity and CG-MCS may be indicated as a value from among a range of potential values, as illustrated in the following Options 1 and 2, respectively.

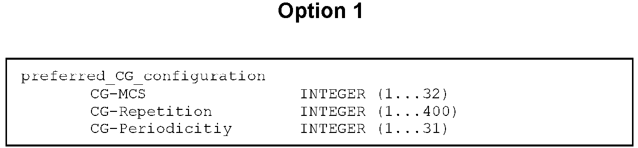

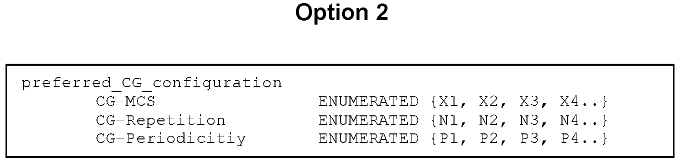

As described above, each LCH may be configured with a priority level by the scheduling device. The priority level may be a value out of a predefined priority level range. The priority level may be configured by the scheduling device using a LogicalChannelConfig information element, as shown in the following:

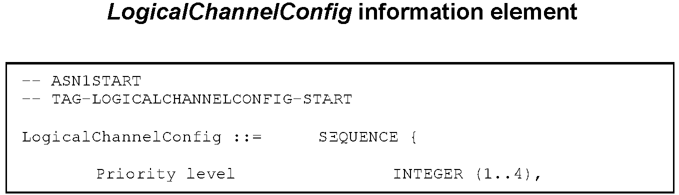

As indicated in the LogicalChannelConfig information element, the priority level of a logical channel may be set to an integer value within the range from 1 to 4. However, the present disclosure is not limited thereto, and the priority level may be indicated as a value from among a different integer range.

Another possibility of how the characteristic indicator, the priority level and/or configuration parameters may be transmitted from the transceiver device to the scheduling device is via MAC CE.

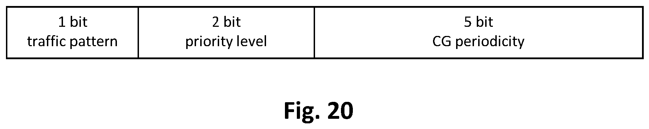

According to specific exemplary 5G-NR-compliant variants, the characteristic indicator, the priority level and the CG periodicity can be transmitted to the base station as the MAC CE illustrated in Fig. 20.

As described further above, the characteristic relating to the small data being "periodic" or "aperiodic" may be indicated by a single bit within the MAC CE. Further, as described above, the priority level may be indicated using two bits and the CG periodicity may be indicated using 5 bits. However, the present disclosure is not limited thereto, and additional indicators or less indicators may be included in the MAC CE to be transmitted to the scheduling device according to one or more variants as described above.

Another possibility on how the characteristic indicator can be provided from the UE to the base station is based on using a preamble of the RACH procedure. Accordingly, it can be exemplarily assumed that a RACH-based solution is adopted for transmitting the small data and the characteristic indicator.

In the above described solutions and implementations of the improved small-data-transmission procedure, it was described that the UE provides the characteristic indicator to the base station. In addition, according to further variants, the UE may transmit at least one other indication to the base station, when performing the transmission of the small data and/or the characteristic indicator. This other indication could be transmitted together with the small data and the characteristic indicator, e.g. as discussed above for the characteristic indicator, e.g. using a message of the RRC protocol, a MAC CE, the UE assistance information message.

According to the solution and implementations of the improved small-data-transmission procedure described above, the small data and the characteristic indicator are transmitted both to the base station. It is however likely or at least possible that the UE in the inactive state has not a lot of resources for transmitting both the small data and the characteristic indicator.

For instance, when exemplarily assuming that a RACH-based small-data transmission is supported by the inactive UEs, the UE can transmit the small data and the characteristic indicator indication based on the Msg3 (4-step RACH) or MsgA (2-step RACH), with however other information, such as the control message e.g. *RRCResumeRequest* message or a buffer status report indicating the actual amount of data in the UE buffer (e.g. the buffer status report might only be included if the small-data transmission does not carry all the small data that is available for transmission). The uplink grant size that is available for the UE to transmit all this information can be quite limited and in fact may not be sufficient to transmit everything with the Msg3 / MsgA. According to further improved variants, different transmission elements can be associated with different priorities, which are then taken into account for the transmission. For instance, characteristic indicator is associated with a higher priority than the small data. Correspondingly, if the available granted resources are not enough to transmit both the small data and the characteristic indicator, the UE prioritizes the indication and does not transmit all of the small data that is available for transmission.

Similarly, in case the control message or the buffer status report is to be transmitted as well, the characteristic indicator is associated with a higher priority than this control message or buffer status report, which in turn however have a higher priority than the small data. In such a case, the following priorities would apply, where the higher priority is listed first:
1) characteristic indicator
2) BSR
3) Small data

### Hardware and Software Implementation of the present disclosure

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC (integrated circuit), a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g. cellular (cell) phone, smart phone), a tablet, a personal computer (PC) (e.g. laptop, desktop, netbook), a camera (e.g. digital still/video camera), a digital player (digital audio/video player), a wearable device (e.g. wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g. an appliance, lighting, smart meter, control panel), a vending machine, and any other "things" in a network of an "Internet of Things (IoT).

The communication may include exchanging data through, for example, a cellular system, a wireless LAN system, a satellite system, etc., and various combinations thereof.

The communication apparatus may comprise a device such as a controller or a sensor, which is coupled to a communication device performing a function of communication described in the present disclosure. For example, the communication apparatus may comprise a controller or a sensor that generates control signals or data signals, which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

Further, the various embodiments may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc. It should be further noted that the individual features of the different embodiments may individually or in arbitrary combination be subject matter to another embodiment.

It would be appreciated by a person skilled in the art that numerous variations and/or modifications may be made to the present disclosure as shown in the specific embodiments. The present embodiments are, therefore, to be considered in all respects to be illustrative and not restrictive.

## Claims

1. A transceiver device for a communication network, comprising:
circuitry (120), which is configured to, in operation, determine that a transmission of small data is to be performed by the transceiver device to a scheduling device (200), wherein
the transceiver device is in an inactive state out of a connected state, an idle state and
the RRC inactive state; and
a transceiver (110), which is configured to, in operation, perform the transmission of the small data to the scheduling device (200);
**characterized in that**
the circuitry (120) is configured to obtain a characteristic relating to the small data; and
the transceiver (110) is configured to perform the transmission of a characteristic indicator indicating the characteristic relating to the small data, wherein
the characteristic relating to the small data includes a characteristic of a traffic pattern of subsequent transmissions of the small data.

2. The transceiver device according to claim 1, wherein
the characteristic indicator indicates whether subsequent transmissions of the small data are periodic or aperiodic.

3. The transceiver device according to claim 2, wherein in a case where the subsequent transmissions of the small data are periodic,
the circuitry (120) is configured to, in operation, determine one or more configuration parameters; and
the transceiver (110) is configured to, in operation, perform the transmission of the small data and one or more parameter indicators, each indicating a respective one of the one or more configuration parameters.

4. The transceiver device according to any one of claims 1 to 3, wherein
the circuitry (120) is configured to, in operation, obtain a signal level and/or quality of a signal transmitted by the scheduling device (200); and
the transceiver (110) is configured to, in operation, perform the transmission of the small data and a quality indicator indicating the signal level and/or quality.

5. The transceiver device according to any one of claims 1 to 4, wherein
the circuitry (120) is configured to, in operation, determine a priority level of subsequent transmissions of the small data; and
the transceiver (110) is configured to, in operation, perform the transmission of the small data and a priority indicator indicating the priority level of the subsequent transmissions of the small data.

6. The transceiver device according to claim 5, wherein
one or more logical channels, LCHs, are configured for the transceiver device, wherein each LCH is associated with a respective priority level; and
the priority level of the subsequent transmissions of the small data is determined according to the priority level of a corresponding configured LCH.

7. The transceiver device according to claim 6, wherein
in a case where the subsequent transmissions of the small data are associated with multiple LCHs, the priority level of the subsequent transmissions of the small data is determined according to the highest priority level of the corresponding configured LCHs.

8. The transceiver device according to any one of claims 1 to 7, wherein
the transmission of the small data and the characteristic indicator is performed as part of a random access procedure performed between the transceiver device and the scheduling device (200).

9. The transceiver device according to any one of claims 1 to 8, wherein
the transceiver (110) is configured to, in operation, receive a state instruction from the scheduling device (200) instructing the transceiver device to transition to the connected state;
the circuitry (120) is configured to, in operation, control the transceiver device to be in accordance with the state instruction received from the scheduling device (200).

10. The transceiver device according to any one of claims 1 to 8, wherein
the transceiver (110) is configured to, in operation, receive a resource indicator indicating resources to be used for the subsequent transmissions of the small data; and
the transceiver (110) is configured to, in operation, perform the subsequent transmissions of the small data using the indicated resources.

11. The transceiver device according to claim 10, wherein
the resource indicator indicates at least one out of dedicated preambles, scheduling request resources, configured grant resources and a validity duration of the indicated resources.

12. A method performed by a transceiver device (100) for a communication network, comprising:
determining (S10) that a transmission of small data is to be performed by the transceiver device (100) to a scheduling device (200), wherein the transceiver device (100) is in an inactive state out of a connected state, an idle state and the RRC inactive state;
obtaining (S11) a characteristic relating to the small data; and
performing (S12) the transmission of the small data and a characteristic indicator indicating the characteristic relating to the small data, wherein
the characteristic relating to the small data includes a characteristic of a traffic pattern of subsequent transmissions of the small data.

13. A scheduling device for a communication network, comprising
a transceiver (210), which is configured to, in operation, receive a transmission of small data and a characteristic indicator indicating a characteristic relating to the small data from a transceiver device (100), wherein the transceiver device (100) is in an inactive state out of a connected state, an idle state and the RRC inactive state; and
circuitry (220), which is configured to, in operation, determine resources to be used by the transceiver device (100) for subsequent transmissions of the small data, based on the characteristic relating to the small data, wherein
the transceiver (210) is configured to, in operation, transmit a resource indicator indicating the resources to be used by the transceiver device (100) for subsequent transmissions of the small data;
**characterized in that**
the characteristic relating to the small data includes a characteristic of a traffic pattern of subsequent transmissions of the small data.

14. A method performed by a scheduling device (200) for a communication network, comprising:
receiving (S20) a transmission of small data and a characteristic indicator indicating a characteristic relating to the small data from a transceiver device (100), wherein the transceiver device (100) is in an inactive state out of a connected state, an idle state and
the RRC inactive state;
determining (S21) resources to be used by the transceiver device (100) for subsequent transmissions of the small data, based on the characteristic relating to the small data; and
transmitting (S22) a resource indicator indicating the resources to be used by the transceiver device (100) for subsequent transmissions of the small data;
**characterized in that**
the characteristic relating to the small data includes a characteristic of a traffic pattern of subsequent transmissions of the small data.

## Patentansprüche

1. Sendeempfängervorrichtung für ein Kommunikationsnetzwerk, umfassend:
eine Schaltung (120), die eingerichtet, im Betrieb zu bestimmen, dass eine Übertragung kleiner Daten von der Sendeempfängervorrichtung an eine Planungsvorrichtung (200) durchzuführen ist, wobei die Sendeempfängervorrichtung in einem inaktiven Zustand ist, aus einem verbundenen Zustand, einem Ruhezustand und dem RRC inaktiven Zustand; und
einen Sendeempfänger (110), der eingerichtet ist, im Betrieb die Übertragung der kleinen Daten an die Planungsvorrichtung (200) durchzuführen;
**dadurch gekennzeichnet, dass**
die Schaltung (120) eingerichtet ist, eine Eigenschaft in Bezug auf die kleinen Daten zu erhalten; und
der Sendeempfänger (110) eingerichtet ist, die Übertragung eines Eigenschaftsindikators, der die Eigenschaft in Bezug auf die kleinen Daten anzeigt, durchzuführen, wobei
die Eigenschaft in Bezug auf die kleinen Daten eine Eigenschaft eines Verkehrsmusters nachfolgender Übertragungen der kleinen Daten enthält.

2. Sendeempfängervorrichtung nach Anspruch 1, wobei
der Eigenschaftsindikator anzeigt, ob nachfolgende Überragungen der kleinen Daten periodisch oder aperiodisch sind.

3. Sendeempfängervorrichtung nach Anspruch 2, wobei in einem Fall, in dem die nachfolgenden Übertragungen der kleinen Daten periodisch sind,
die Schaltung (120) eingerichtet ist, im Betrieb eine oder mehrere Konfigurationsparameter zu bestimmen; und
der Sendeempfänger (110) eingerichtet ist, im Betrieb die Übertragung der kleinen Daten und eines oder mehrerer Parameterindikatoren durchführt, die jeweils einen jeweiligen des einen oder der mehreren Konfigurationsparameter anzeigen.

4. Sendeempfängervorrichtung nach einem der Ansprüche 1 bis 3, wobei
die Schaltung (120) eingerichtet ist, im Betrieb ein Signalniveau und/oder Qualität eines Signals zu erhalten, das von der Planungsvorrichtung (200) übertragen wird; und
der Sendeempfänger (110) eingerichtet ist, im Betrieb die Übertragung der kleinen Daten und eines Qualitätsindikators, der das Signalniveau oder die Qualität anzeigt, durchführt.

5. Sendeempfängervorrichtung nach einem der Ansprüche 1 bis 4, wobei
die Schaltung (120) eingerichtet ist, im Betrieb ein Prioritätsniveau nachfolgender Übertragungen der kleinen Daten zu bestimmen; und
der Sendeempfänger (110) eingerichtet ist, im Betrieb die Übertragung der kleinen Daten und eines Prioritätsindikators, der das Prioritätsniveau der nachfolgenden Übertragungen der kleinen Daten anzeigt, durchzuführen.

6. Sendeempfängervorrichtung nach Anspruch 5, wobei
ein oder mehrere logische Kanäle, LCHs, für die Sendeempfängervorrichtung konfiguriert sind, wobei jeder LCH einem jeweiligen Prioritätsniveau zugeordnet ist; und
das Prioritätsniveau der nachfolgenden Übertragungen der kleinen Daten entsprechend dem Prioritätsniveau eines entsprechenden konfigurierten LCHs bestimmt wird.

7. Sendeempfängervorrichtung nach Anspruch 6, wobei
in einem Fall, in dem die nachfolgenden Übertragungen der kleinen Daten mehreren LCHs zugeordnet sind, das Prioritätsniveau der nachfolgenden Übertragungen der kleinen Daten entsprechend dem höchsten Prioritätsniveau der entsprechenden konfigurierten LCHs bestimmt wird.

8. Sendeempfängervorrichtung nach einem der Ansprüche 1 bis 7, wobei
die Übertragung der kleinen Daten und des Eigenschaftsindikators als Teil eines Zufallszugangsvorgangs durchgeführt wird, der zwischen der Sendempfängervorrichtung und der Planungsvorrichtung (200) durchgeführt wird.

9. Sendeempfängervorrichtung nach einem der Ansprüche 1 bis 8, wobei
der Sendeempfänger (110) eingerichtet ist, im Betrieb eine Zustandsanweisung von der Planungsvorrichtung (200) zu empfangen, die die Sendeempfängervorrichtung anweist, in den verbundenen Zustand überzugehen;
die Schaltung (120) eingerichtet ist, im Betrieb die Sendeempfängervorrichtung zu steuern, der Zustandsanweisung, die von der Planungsvorrichtung (200) erhalten wird, zu entsprechen.

10. Sendeempfängervorrichtung nach einem der Ansprüche 1 bis 8, wobei
der Sendempfänger (110) eingerichtet ist, im Betrieb einen Ressourcenindikator zu empfangen, der Ressourcen anzeigt, die für die nachfolgenden Übertragungen der kleinen Daten zu verwenden sind; und
der Sendempfänger (110) eingerichtet ist, im Betrieb die nachfolgenden Übertragungen der kleinen Daten unter Verwendung der angezeigten Ressourcen durchzuführen.

11. Sendeempfängervorrichtung nach Anspruch 10, wobei
der Ressourcenindikator mindestens eines aus dedizierten Präambeln, Planungsanfrageressourcen, konfigurierten Zuteilungsressourcen und einer Gültigkeitsdauer der angezeigten Ressourcen anzeigt.

12. Verfahren, das von einer Sendeempfängervorrichtung (100) für ein Kommunikationsnetzwerk durchgeführt wird, umfassend:
Bestimmen (S10), dass eine Übertragung kleiner Daten von der Sendeempfängervorrichtung (100) an eine Planungsvorrichtung (200) durchzuführen ist, wobei die Sendeempfängervorrichtung (100) in einem inaktiven Zustand ist, aus einem verbundenen Zustand, einem Ruhezustand und dem RRC inaktiven Zustand;
Erhalten (S11) einer Eigenschaft in Bezug auf die kleinen Daten; und
Durchführen (S12) der Übertragung der kleinen Daten und eines Eigenschaftsindikators, der die Eigenschaft in Bezug auf die kleinen Daten anzeigt, wobei
die Eigenschaft in Bezug auf die kleinen daten eine Eigenschaft eines Verkehrsmusters nachfolgender Übertragungen der kleinen Daten enthält.

13. Planungsvorrichtung für ein Kommunikationsnetzwerk, umfassend:
einen Sendeempfänger (210), der eingerichtet ist, im Betrieb eine Übertragung kleiner Daten und eines Eigenschaftsindikators, der eine Eigenschaft in Bezug auf die kleinen Daten anzeigt, von einer Sendeempfängervorrichtung (100) zu empfangen, wobei die Sendeempfängervorrichtung (100) in einem inaktiven Zustand ist, aus einem verbundenen Zustand, einem Ruhezustand und dem RRC inaktiven Zustand; und
eine Schaltung (220), die eingerichtet ist, im Betrieb Ressourcen zu bestimmen, die von der Sendeempfängervorrichtung (100) für nachfolgende Übertragungen der kleinen Daten zu verwenden sind, auf Grundlage der Eigenschaft in Bezug auf die kleinen Daten, wobei
der Sendeempfänger (210) eingerichtet ist, im Betrieb einen Ressourcenindikator zu übertragen, der die Ressourcen anzeigt, die von der Sendeempfängervorrichtung (100) für nachfolgende Übertragungen der kleinen Daten zu verwenden sind;
**dadurch gekennzeichnet, dass**
die Eigenschaft in Bezug auf die kleinen Daten eine Eigenschaft eines Verkehrsmusters nachfolgender Übertragungen der kleinen Daten enthält.

14. Verfahren, das von einer Planungsvorrichtung (200) für ein Kommunikationsnetzwerk durchgeführt wird, umfassend:
Empfangen (S20) einer Übertragung kleiner Daten und eines Eigenschaftsindikators, der eine Eigenschaft in Bezug auf die kleinen Daten anzeigt, von einer Sendeempfängervorrichtung (100), wobei die Sendeempfängervorrichtung (100) in einem inaktiven Zustand ist, aus einem verbundenen Zustand, einem Ruhezustand und dem RRC inaktiven Zustand;
Bestimmen (S21) von Ressourcen, die von der Sendeempfängervorrichtung (100) für nachfolgende Übertragungen der kleinen Daten zu verwenden sind, auf Grundlage der Eigenschaft in Bezug auf die kleinen Daten; und
Übertragen (S22) eines Ressourcenindikators, der die Ressourcen anzeigt, die von der Sendeempfängervorrichtung (100) für nachfolgende Übertragungen der kleinen Daten zu verwenden sind;
**dadurch gekennzeichnet, dass**
die Eigenschaft in Bezug auf die kleinen Daten eine Eigenschaft eines Verkehrsmusters nachfolgender Übertragungen der kleinen Daten enthält.

## Revendications

1. Dispositif émetteur-récepteur pour un réseau de communication, comprenant :
un ensemble de circuits (120) configuré pour, en fonctionnement, déterminer qu'une transmission de petites données à un dispositif d'ordonnancement (200) doit être mise en œuvre par le dispositif émetteur-récepteur, dans lequel le dispositif émetteur-récepteur est dans un état inactif hors d'un état connecté, d'un état de veille et de l'état inactif de contrôle de ressources radio, RRC (Radio Resource Control), ; et
un émetteur-récepteur (110) configuré pour, en fonctionnement, mettre en œuvre la transmission des petites données au dispositif d'ordonnancement (200),
**caractérisé en ce que**
l'ensemble de circuits (120) est configuré pour obtenir une caractéristique relative aux petites données ; et
l'émetteur-récepteur (110) est configuré pour mettre en œuvre la transmission d'un indicateur de caractéristique indiquant la caractéristique relative aux petites données,
dans lequel la caractéristique relative aux petites données inclut une caractéristique d'un modèle de trafic de transmissions subséquentes des petites données.

2. Dispositif émetteur-récepteur selon la revendication 1, dans lequel
l'indicateur de caractéristique indique si les transmissions subséquentes des petites données sont périodiques ou apériodiques.

3. Dispositif émetteur-récepteur selon la revendication 2, dans lequel, dans le cas où les transmissions subséquentes des petites données sont périodiques,
l'ensemble de circuits (120) est configuré pour, en fonctionnement, déterminer un ou plusieurs paramètres de configuration ; et
l'émetteur-récepteur (110) est configuré pour, en fonctionnement, mettre en œuvre la transmission des petites données et d'un ou plusieurs indicateurs de paramètre indiquant chacun un paramètre parmi lesdits un ou plusieurs paramètres de configuration respectifs.

4. Dispositif émetteur-récepteur selon l'une quelconque des revendications 1 à 3, dans lequel
l'ensemble de circuits (120) est configuré pour, en fonctionnement, obtenir un niveau et/ou une qualité de signal d'un signal transmis par le dispositif d'ordonnancement (200) ; et
l'émetteur-récepteur (110) est configuré pour, en fonctionnement, mettre en œuvre la transmission des petites données et d'un indicateur de qualité indiquant le niveau et/ou la qualité de signal.

5. Dispositif émetteur-récepteur selon l'une quelconque des revendications 1 à 4, dans lequel
l'ensemble de circuits (120) est configuré pour, en fonctionnement, déterminer un niveau de priorité des transmissions subséquentes des petites données ; et
l'émetteur-récepteur (110) est configuré pour, en fonctionnement, mettre en œuvre la transmission des petites données et d'un indicateur de priorité indiquant le niveau de priorité des transmissions subséquentes des petites données.

6. Dispositif émetteur-récepteur selon la revendication 5, dans lequel
un ou plusieurs canaux logiques, LCH (Logical CHannel), sont configurés pour le dispositif émetteur-récepteur, dans lequel chaque LCH est associé à un niveau de priorité respectif ; et
le niveau de priorité des transmissions subséquentes des petites données est déterminé en fonction du niveau de priorité d'un LCH configuré correspondant.

7. Dispositif émetteur-récepteur selon la revendication 6, dans lequel
dans le cas où les transmissions subséquentes des petites données sont associées à de multiples LCH, le niveau de priorité des transmissions subséquentes des petites données est déterminé en fonction du niveau de priorité le plus élevé des LCH configurés correspondants.

8. Dispositif émetteur-récepteur selon l'une quelconque des revendications 1 à 7, dans lequel
la transmission des petites données et de l'indicateur de caractéristique est mise en œuvre dans le cadre d'une procédure d'accès aléatoire mise en œuvre entre le dispositif émetteur-récepteur et le dispositif d'ordonnancement (200).

9. Dispositif émetteur-récepteur selon l'une quelconque des revendications 1 à 8, dans lequel
l'émetteur-récepteur (110) est configuré pour, en fonctionnement, recevoir une instruction d'état du dispositif d'ordonnancement (200) commandant au dispositif émetteur-récepteur de passer à l'état connecté ; et
l'ensemble de circuits (120) est configuré pour, en fonctionnement, contrôler le dispositif émetteur-récepteur conformément à l'instruction d'état reçue du dispositif d'ordonnancement (200).

10. Dispositif émetteur-récepteur selon l'une quelconque des revendications 1 à 8, dans lequel
l'émetteur-récepteur (110) est configuré pour, en fonctionnement, recevoir un indicateur de ressources indiquant les ressources à utiliser pour les transmissions subséquentes des petites données ; et
l'émetteur-récepteur (110) est configuré pour, en fonctionnement, mettre en œuvre les transmissions subséquentes des petites données en utilisant les ressources indiquées.

11. Dispositif émetteur-récepteur selon la revendication 10, dans lequel
l'indicateur de ressources indique au moins un élément parmi les préambules dédiés, les ressources de requête d'ordonnancement, les ressources d'attribution configurées et une durée de validité des ressources indiquées.

12. Procédé mis en œuvre par un dispositif émetteur-récepteur (100) pour un réseau de communication, comprenant :
la détermination (S10) qu'une transmission de petites données à un dispositif d'ordonnancement (200) doit être mise en œuvre par le dispositif émetteur-récepteur (100), dans lequel le dispositif émetteur-récepteur (100) est dans un état inactif hors d'un état connecté, d'un état de veille et de l'état RRC inactif ;
l'obtention (S11) d'une caractéristique relative aux petites données ; et
la mise en œuvre (S12) de la transmission des petites données et d'un indicateur de caractéristique indiquant la caractéristique relative aux petites données,
dans lequel la caractéristique relative aux petites données inclut une caractéristique d'un modèle de trafic de transmissions subséquentes des petites données.

13. Dispositif d'ordonnancement pour un réseau de communication, comprenant
un émetteur-récepteur (210) configuré pour, en fonctionnement, recevoir une transmission de petites données et un indicateur de caractéristique indiquant une caractéristique relative aux petites données à partir d'un dispositif émetteur-récepteur (100), dans lequel le dispositif émetteur-récepteur (100) est dans un état inactif hors d'un état connecté, d'un état de veille et de l'état RRC inactif ; et
un ensemble de circuits (220) configuré pour, en fonctionnement, déterminer les ressources à utiliser par le dispositif émetteur-récepteur (100) pour les transmissions subséquentes des petites données, sur la base de la caractéristique relative aux petites données,
dans lequel l'émetteur-récepteur (210) est configuré pour, en fonctionnement, transmettre un indicateur de ressources indiquant les ressources à utiliser par le dispositif émetteur-récepteur (100) pour les transmissions subséquentes des petites données,
**caractérisé en ce que**
la caractéristique relative aux petites données inclut une caractéristique d'un modèle de trafic de transmissions subséquentes des petites données.

14. Procédé mis en œuvre par un dispositif d'ordonnancement (200) pour un réseau de communication, comprenant :
la réception (S20) d'une transmission de petites données et d'un indicateur de caractéristique indiquant une caractéristique relative aux petites données provenant d'un dispositif émetteur-récepteur (100), dans lequel le dispositif émetteur-récepteur (100) est dans un état inactif hors d'un état connecté, d'un état de veille et de l'état RRC inactif ;
la détermination (S21) des ressources à utiliser par le dispositif émetteur-récepteur (100) pour les transmissions subséquentes des petites données, sur la base de la caractéristique relative aux petites données ; et
la transmission (S22) d'un indicateur de ressources indiquant les ressources à utiliser par le dispositif émetteur-récepteur (100) pour les transmissions subséquentes des petites données,
**caractérisé en ce que**
la caractéristique relative aux petites données inclut une caractéristique d'un modèle de trafic de transmissions subséquentes des petites données.
